# EUROPÄISCHE PATENTANMELDUNG

(11) **EP 4 844 581 A1**
(43) Veröffentlichungstag der Anmeldung: **25.11.2026**
(21) Anmeldenummer: 26176705.7
(22) Anmeldetag: 05.05.2026
(51) Int. Cl.: G06F 9/52, G05B 19/042, G06F 9/48

(54) **STEUERUNGSVORRICHTUNG UND VERFAHREN FÜR EIN AUTOMATISIERUNGSSYSTEM**

(30) Priorität: 20.05.2025 DE 102025119622
(71) Anmelder: Pilz GmbH & Co. KG, 73760 Ostfildern (DE)
(72) Erfinder: Banzhaf, Bernd, 73760 Ostfildern (DE); von Haugwitz, Frank, 73760 Ostfildern (DE)
(74) Vertreter: Witte, Weller & Partner Patentanwälte mbB

(57) **Zusammenfassung**

Steuerungsvorrichtung (10) für ein Automatisierungssystem, aufweisend: einen ersten Verarbeitungskanal A mit einer ersten Verarbeitungseinheit (26A), die dazu eingerichtet ist, eine Vielzahl von Aufgaben in mindestens zwei Ausführungssträngen, welche auf eine gemeinsame Ressource (28A) des ersten Verarbeitungskanals A zugreifen können, nebenläufig auszuführen; einen zweiten Verarbeitungskanal B mit einer zweiten Verarbeitungseinheit (26B), die dazu eingerichtet ist, die gleiche Vielzahl von Aufgaben parallel zu der ersten Verarbeitungseinheit (26A) in mindestens zwei Ausführungssträngen, welche auf eine gemeinsame Ressource (28B) des zweiten Verarbeitungskanals B zugreifen können, nebenläufig auszuführen. Die Vielzahl von Aufgaben ist zeitlich voneinander getrennten Abschnitten zuordenbar. Die erste Verarbeitungseinheit (26A) und die zweite Verarbeitungseinheit (26B) sind jeweils dazu eingerichtet, einen ersten Abschnitt (22) der zeitlich voneinander getrennten Abschnitte unter Verwendung einer ersten Zugriffssteuerung auszuführen und einen zweiten Abschnitt (24) der zeitlich voneinander getrennten Abschnitte unter Verwendung einer zweiten Zugriffssteuerung auszuführen. Die erste Zugriffssteuerung ermöglicht einen lesenden und schreibenden Zugriff auf die jeweilige gemeinsame Ressource (28A, 28B) und die zweite Zugriffssteuerung verhindert einen schreibenden Zugriff auf die jeweilige gemeinsame Ressource (28A, 28B).

## Beschreibung

Die vorliegende Erfindung betrifft eine Steuerungsvorrichtung für ein Automatisierungssystem sowie ein Verfahren zum Steuern eines Automatisierungssystems. Insbesondere betrifft die Erfindung eine Steuerungsvorrichtung mit einem ersten Verarbeitungskanal und einem zweiten Verarbeitungskanal, in denen jeweils eine Vielzahl von Aufgaben nebenläufig ausführbar sind und Zugriff auf eine gemeinsame Ressource haben.

Steuerungsvorrichtungen für ein Automatisierungssystem, bspw. speicherprogrammierbare Steuerungen (SPS), übernehmen zentrale Steuerungs- und Regelungsaufgaben in industriellen Anwendungen. Sie steuern Maschinen, Produktionsanlagen oder Prozesse und verarbeiten dabei eine Vielzahl von Eingangsgrößen in Echtzeit, um entsprechende Ausgangssignale für die Aktorik zu erzeugen. Da industrielle Prozesse häufig strenge Anforderungen an Reaktionszeiten und Vorhersagbarkeit stellen, müssen die Steuerungsvorrichtungen mit hoher zeitlicher Präzision arbeiten, um beispielsweise Produktionsausfälle oder sicherheitskritische Zustände zu vermeiden.

Eine Steuerungsvorrichtung führt üblicherweise mehrere Aufgaben aus, die verschiedene Funktionen innerhalb des Automatisierungssystems erfüllen. Diese Aufgaben können beispielsweise das Einlesen von Sensordaten, die Verarbeitung von Steueralgorithmen, die Ansteuerung von Motoren oder anderen Aktoren sowie die Kommunikation mit übergeordneten Systemen umfassen. In modernen Steuerungsvorrichtungen der Automatisierungstechnik ist es üblich, dass diese Aufgaben nebenläufig, also gleichzeitig oder quasigleichzeitig, ausgeführt werden, um eine effiziente Nutzung der Rechenkapazitäten zu ermöglichen.

Die Nebenläufigkeit in einer Steuerungsvorrichtung kann durch verschiedene Mechanismen realisiert werden. Eine Möglichkeit besteht darin, mehrere physische Recheneinheiten, beispielsweise mehrere Prozessoren oder Prozessorkerne, zu verwenden. Alternativ kann eine einzelne Verarbeitungseinheit einer Steuerungsvorrichtung mehrere Aufgaben quasiparallel durch Multithreading oder Task-Scheduling innerhalb eines Betriebssystems abarbeiten. Hierbei greifen die Aufgaben oftmals auf gemeinsame Ressourcen zu, etwa globale Speicherbereiche, Hardware-Register oder Kommunikationsschnittstellen.

Damit die parallele Ausführung von Aufgaben zu korrekten und vorhersagbaren Ergebnissen führt, müssen Mechanismen zur Synchronisation und Zugriffskontrolle für geteilte Ressourcen implementiert werden. Eine verbreitete Methode besteht in der Verwendung von Sperrmechanismen, sogenannten Locks, auch Mutexe (Mutual Exclusion Locks) genannt. Diese stellen sicher, dass jeweils nur eine Aufgabe exklusiven Zugriff auf eine Ressource erhält, indem sie konkurrierende Zugriffe sequenziell steuern. Alternativ kommen Semaphoren oder andere Synchronisationsmechanismen zum Einsatz, um den Zugriff mehrerer Aufgaben zu koordinieren und unerwünschte Nebenläufigkeitsprobleme zu vermeiden.

Allerdings bringen diese Mechanismen anderweitige Herausforderungen mit sich. Insbesondere kann es bei der Verwendung von Sperrmechanismen zu einer sogenannten Prioritäteninversion kommen. Dieses Problem tritt auf, wenn eine hochpriorisierte Aufgabe auf eine Ressource zugreifen muss, die jedoch von einer niedrigpriorisierten Aufgabe gesperrt ist. Kritisch wird dies, wenn eine mittelpriorisierte Aufgabe aktiv ist, die verhindert, dass die niedrigpriorisierte Aufgabe ihre Sperre aufhebt. Dadurch wird die hochpriorisierte Aufgabe blockiert, obwohl sie für den ordnungsgemäßen Betrieb des Systems vorrangig ausgeführt werden sollte. Diese unvorhergesehenen Verzögerungen können in Echtzeitsystemen schwerwiegende Folgen haben, da sie dazu führen können, dass zeitkritische Anforderungen nicht eingehalten werden.

Es sind zwar verschiedene Ansätze bekannt, um das Problem der Prioritäteninversion zu begrenzen, etwa die Verwendung eines Prioritätsdeckelungsprotokolls oder Verfahren zur Prioritätenvererbung. Diese Methoden ermöglichen es, zumindest Deadlocks zu vermeiden oder deren Auswirkungen zu reduzieren. Allerdings erfordern sie oft zusätzliche Rechenkapazitäten oder komplexe Algorithmen, die in ressourcenbeschränkten Umgebungen, insbesondere in Echtzeitsystemen, nicht immer praktikabel sind.

Sha et al. beschreiben bspw. in "Priority Inheritance Protocols: An Approach to Real-Time Synchronization" Prioritätsvererbungsprotokolle zur Synchronisation in Echtzeitsystemen. Es wird erkannt, dass herkömmliche Sperrmechanismen wie Semaphore oder Monitore zu unkontrollierter Prioritätsinversion führen können. Zur Abhilfe werden insbesondere ein Basic Priority Inheritance Protocol und ein Priority Ceiling Protocol vorgeschlagen, die Blockierzeiten begrenzen und Deadlocks vermeiden sollen. Diese Ansätze beruhen jedoch weiterhin auf Sperrmechanismen und Prioritätsanpassungen beim Zugriff auf gemeinsame Ressourcen.

Bei sicheren Steuerungsvorrichtungen, auch als Sicherheitssteuerungen, Safety-SPS oder Failsafe-(FS)-Steuerungen bezeichnet, ergeben sich weitere Herausforderungen im Zusammenhang mit der Synchronisation und Zugriffskontrolle auf gemeinsame Ressourcen. Sichere Steuerungsvorrichtungen sind darauf ausgelegt, sicherheitskritische Prozesse zu steuern und müssen daher besonders strenge Anforderungen an Fehlertoleranz und Determinismus erfüllen. Ein wesentliches Merkmal sicherer Steuerungsvorrichtungen ist die redundante Ausführung von Aufgaben auf mehreren unabhängigen Verarbeitungskanälen, typischerweise einem ersten und einem zweiten Kanal (Kanal A und Kanal B).

In einer sicheren Steuerungsvorrichtung werden somit die gleichen Aufgaben parallel in beiden Verarbeitungskanälen ausgeführt, um Abweichungen oder Fehler erkennen zu können. Dies bedeutet jedoch, dass auch die Mechanismen zur Synchronisation der Zugriffskontrolle für gemeinsame Ressourcen in den jeweiligen Verarbeitungskanälen gleich ablaufen müssen. Ist dies nicht der Fall, kann es zu Abweichungen und Deadlocks zwischen den Kanälen kommen, die den sicheren Betrieb der Steuerungsvorrichtung beeinträchtigen und zu unerwarteten Zuständen führen können.

Die Anzahl der notwendigen Synchronisationsvorgänge für die Zugriffskontrolle hängt hierbei direkt von zwei Faktoren ab: der Anzahl der Aufgaben, die auf eine gemeinsame Ressource in beiden Kanälen zugreifen, sowie der Anzahl der geteilten Ressourcen selbst. Je mehr parallele Aufgaben vorhanden sind und je mehr Ressourcen geteilt werden, desto komplexer wird das Synchronisationsmanagement, da Sperrmechanismen und Maßnahmen gegen Prioritäteninversion so umgesetzt werden müssen, dass sie deterministisch und konsistent über beide Verarbeitungskanäle hinweg arbeiten. Ferner, je komplexer das Synchronisationsmanagement ist, desto mehr Zeit benötigt die sichere Steuerung eines Automatisierungssystems, um dieses auszuführen. Eine fehlerhafte oder unzureichende Implementierung kann folglich nicht nur zu Leistungsverlusten führen, sondern auch die Sicherheit des Gesamtsystems gefährden.

Vor diesem Hintergrund ist es eine Aufgabe der vorliegenden Erfindung, eine Steuerungsvorrichtung und ein entsprechendes Verfahren bereitzustellen, die eine sichere Steuerung eines Automatisierungssystems ermöglichen und dabei eine zuverlässige und effiziente Nebenläufigkeit in den einzelnen Verarbeitungskanälen ausführen.

Gemäß einem Aspekt der vorliegenden Offenbarung wird diese Aufgabe gelöst durch eine Steuerungsvorrichtung für ein Automatisierungssystem, aufweisend: einen ersten Verarbeitungskanal A mit einer ersten Verarbeitungseinheit, die dazu eingerichtet ist, eine Vielzahl von Aufgaben in mindestens zwei Ausführungssträngen, welche auf eine gemeinsame Ressource des ersten Verarbeitungskanals A zugreifen können, nebenläufig auszuführen; und einen zweiten Verarbeitungskanal B mit einer zweiten Verarbeitungseinheit, die dazu eingerichtet ist, die gleiche Vielzahl von Aufgaben parallel zu der ersten Verarbeitungseinheit in mindestens zwei Ausführungssträngen, welche auf eine gemeinsame Ressource des zweiten Verarbeitungskanals B zugreifen können, nebenläufig auszuführen, wobei die Vielzahl von Aufgaben zeitlich voneinander getrennten Abschnitten zuordenbar ist, wobei die erste Verarbeitungseinheit und die zweite Verarbeitungseinheit jeweils dazu eingerichtet sind, einen ersten Abschnitt der zeitlich voneinander getrennten Abschnitte unter Verwendung einer ersten Zugriffssteuerung auszuführen, und einen zweiten Abschnitt der zeitlich voneinander getrennten Abschnitte unter Verwendung einer zweiten Zugriffssteuerung auszuführen, wobei die erste Zugriffssteuerung einen lesenden und schreibenden Zugriff auf die jeweilige gemeinsame Ressource ermöglicht, und wobei die zweite Zugriffssteuerung einen schreibenden Zugriff auf die jeweilige gemeinsame Ressource verhindert.

Gemäß einem weiteren Aspekt der vorliegenden Offenbarung wird die Aufgabe ferner gelöst durch ein Verfahren zum Steuern eines Automatisierungssystems, aufweisend:
- Zuweisen einer Vielzahl von Aufgaben zu einem ersten Verarbeitungskanal A, in dem die zugewiesenen Aufgaben durch eine erste Verarbeitungseinheit in mindestens zwei Ausführungssträngen, welche auf eine gemeinsame Ressource des erstens Verarbeitungskanals B zugreifen können, nebenläufig ausführbar sind;
- Zuweisen der gleichen Vielzahl von Aufgaben zu einem zweiten Verarbeitungskanal B, in dem die zugewiesenen Aufgaben durch eine zweite Verarbeitungseinheit in mindestens zwei Ausführungssträngen, welche auf eine gemeinsame Ressource des zweiten Verarbeitungskanals B zugreifen können, nebenläufig ausführbar sind;
- einheitliches Zuweisen der Vielzahl von Aufgaben des ersten Verarbeitungskanals A und des zweiten Verarbeitungskanals B zu zeitlich voneinander getrennten Abschnitten;
- paralleles Ausführen eines ersten Abschnitts der zeitlich voneinander getrennten Abschnitte in dem ersten Verarbeitungskanal A und dem zweiten Verarbeitungskanal B unter Verwendung einer ersten Zugriffssteuerung, wobei die erste Zugriffssteuerung einen lesenden und schreibenden Zugriff auf die jeweilige gemeinsame Ressource ermöglicht; und
- paralleles Ausführen eines zweiten Abschnitts der zeitlich voneinander getrennten Abschnitte in dem ersten Verarbeitungskanal A und dem zweiten Verarbeitungskanal B unter Verwendung einer zweiten Zugriffssteuerung, wobei die zweite Zugriffssteuerung einen schreibenden Zugriff auf die jeweilige gemeinsame Ressource verhindert.

Es ist somit eine Idee der vorliegenden Erfindung, einen Synchronisationsaufwand zwischen zwei parallel arbeitenden Verarbeitungskanälen A und B durch eine deterministische und zeitlich vorhersehbare Zugriffssteuerung zu reduzieren. Mit anderen Worten: Die von beiden Kanälen parallel ausgeführten Aufgaben sind zeitlich so strukturiert, dass ein schreibender Zugriff auf eine gemeinsame Ressource in einem jeweiligen Kanal nur innerhalb bestimmter Zeitabschnitte (erster Abschnitt) erfolgen darf, während in anderen Zeitabschnitten (zweiter Abschnitt) ausschließlich lesende Zugriffe erlaubt sind. Dadurch kann der Synchronisationsaufwand, der andernfalls erforderlich wäre, um den zeitlichen Zugriff auf gemeinsam genutzte Ressourcen kanalübergreifend abzustimmen, verringert oder vollständig vermieden werden.

In dem zweiten Abschnitt ist der Zugriff auf eine gemeinsame Ressource eines Kanals auf Lesezugriffe beschränkt. Das bedeutet, dass eine Verarbeitungseinheit, die für die Ausführung der Aufgabe im ersten Verarbeitungskanal zuständig ist, im zweiten Abschnitt lediglich lesend auf die gemeinsame Ressource dieses Kanals zugreifen darf - und zwar unabhängig davon, in welchem Ausführungsstrang (Prozess, Thread etc.) der Zugriff erfolgt. Gleiches gilt für den zweiten Verarbeitungskanal: Auch dort darf die jeweilige Verarbeitungseinheit im zweiten Abschnitt nur lesend auf die gemeinsame Ressource zugreifen. Da in beiden Kanälen ausschließlich lesende Zugriffe stattfinden, sind in diesem Abschnitt keine speziellen Synchronisations- oder Zugriffskontrollmechanismen - wie beispielsweise Sperrmechanismen mittels Mutexe - erforderlich. Folglich entfällt auch eine Synchronisation solcher Mechanismen zwischen den beiden Kanälen, was die Ablaufsteuerung insgesamt vereinfacht.

In dem ersten Abschnitt kann in jedem Kanal sowohl lesend als auch schreibend auf die jeweilige gemeinsame Ressource zugegriffen werden. Um dabei die Konsistenz der Ressource sicherzustellen, ist eine Koordination der Zugriffe erforderlich - insbesondere dann, wenn die Verarbeitungseinheit nebenläufige Ausführungsstränge unterstützt. Eine mögliche Koordinationsstrategie im ersten Abschnitt könnte darin bestehen, Nebenläufigkeit vollständig auszuschließen, sodass nur ein einzelner Ausführungsstrang aktiv ist und die Zugriffe auf die gemeinsame Ressource zwangsläufig sequenziell erfolgen. Erfolgt der Zugriff streng sequenziell, kann auf Mechanismen zur Nebenläufigkeitssteuerung verzichtet werden, wodurch wiederum keine Synchronisation zwischen den Verarbeitungskanälen in diesem Abschnitt erforderlich ist. Folglich kann die Synchronisation zwischen den Kanälen entfallen, wobei zumindest im zweiten Abschnitt eine nebenläufige Ausführung mit lesendem Zugriff auf eine gemeinsame Ressource zugelassen werden kann.

Durch die zeitliche Trennung der Zugriffstypen innerhalb der einzelnen Kanäle kann somit erreicht werden, dass zumindest lesende Zugriffe nicht mehr durch Sperrmechanismen abgesichert werden müssen. Solche Mechanismen werden nur im ersten Abschnitt benötigt - und auch dort nur, sofern nicht vollständig auf Nebenläufigkeit verzichtet wird. Besonders in redundanten Systemen ist dies vorteilhaft: Wenn beide Kanäle die zeitliche Trennung der Zugriffsarten umsetzen, kann eine aufwendige Synchronisation zwischen den Kanälen reduziert oder sogar ganz vermieden werden. Gleichzeitig lassen sich die Geschwindigkeitsvorteile einer nebenläufigen Ausführung - insbesondere im zweiten Abschnitt, in dem nur lesende Zugriffe stattfinden - optimal nutzen. Dadurch kann eine verbesserte und effizientere, zugleich sichere Steuerungsvorrichtung mit redundanten Verarbeitungskanälen gemäß der vorliegenden Offenbarung realisiert werden. Die eingangs genannte Aufgabe ist somit vollständig gelöst.

In einer weiteren Ausgestaltung kann jede Aufgabe der Vielzahl von Aufgaben entweder dem ersten Abschnitt oder dem zweiten Abschnitt zugeordnet sein. Ferner können die Verarbeitungseinheiten dazu eingerichtet sein, in dem ersten Abschnitt Aufgaben ausschließlich sequenziell zu verarbeiten und in dem zweiten Abschnitt sequenziell und/oder parallel.

Gemäß dieser Ausgestaltung wird jede Aufgabe der Vielzahl von Aufgaben entweder dem ersten oder dem zweiten Abschnitt zugeordnet. Dadurch wird sichergestellt, dass zu jedem Zeitpunkt eindeutig festgelegt ist, wie Aufgaben auf die gemeinsame Ressource zugreifen dürfen. Diese klare Festlegung für alle Aufgaben ermöglicht eine deterministische Ablaufsteuerung, da bereits im Voraus bekannt ist, wann und wie eine Aufgabe mit der gemeinsamen Ressource interagiert.

Die Verarbeitungseinheiten der Verarbeitungskanäle sind zudem so konzipiert, dass im ersten Abschnitt sämtliche Aufgaben ausschließlich sequenziell abgearbeitet werden. Das bedeutet, dass konkurrierende Zugriffe auf die jeweilige Ressource ausgeschlossen sind, da zu jedem Zeitpunkt nur eine einzige Aufgabe mit der Ressource interagiert. Diese Vorgehensweise eliminiert das Risiko von Dateninkonsistenzen oder Race Conditions, wie sie typischerweise in nebenläufigen Systemen auftreten können. Da keine zusätzlichen Sperrmechanismen erforderlich sind, entfallen auch die damit verbundenen Wartezeiten, die in herkömmlichen Systemen durch das Warten auf die Freigabe einer Ressource entstehen. Dies führt zu einer effizienteren Nutzung der Prozessorzeit und reduziert zugleich den Verwaltungsaufwand für die Synchronisation der Aufgaben. Darüber hinaus kann diese Ausgestaltung die Notwendigkeit einer Synchronisation von Sperrmechanismen zwischen den parallel arbeitenden Verarbeitungskanälen im ersten Abschnitt vollständig entfallen lassen.

Im zweiten Abschnitt können Aufgaben entweder sequenziell oder parallel ausgeführt werden. Da in diesem Abschnitt keine Aufgabe die Ressource verändert, besteht keine Gefahr von Inkonsistenzen oder wechselseitigen Abhängigkeiten zwischen den Aufgaben. Die Möglichkeit einer parallelen Verarbeitung in diesem Abschnitt erhöht die Effizienz des Systems, da mehrere Aufgaben gleichzeitig abgearbeitet werden können, ohne dass ein Koordinationsaufwand für den Ressourcenzugriff entsteht. Insbesondere für Berechnungen, Datenverarbeitung oder Kommunikationsaufgaben, die keinen direkten Zugriff auf die gemeinsame Ressource erfordern, kann dies zu einer signifikanten Leistungssteigerung führen.

Gemäß dieser Ausgestaltung erhält das System folglich eine klare und vorhersagbare Struktur, in der sichergestellt ist, dass sich Aufgaben nicht gegenseitig behindern. Prioritäteninversionen oder unvorhersehbare Verzögerungen durch blockierte Zugriffe können vollständig vermieden werden, während Echtzeitanforderungen zuverlässiger eingehalten werden können, da der Zugriff auf die Ressource zeitlich deterministisch erfolgt. Darüber hinaus wird die Implementierung und Wartung des Systems erleichtert, da Entwickler die Aufgaben bereits bei ihrer Zuweisung zu einem Abschnitt entsprechend ihren Anforderungen klassifizieren können.

Durch die Kombination einer strikten sequenziellen Verarbeitung im ersten Abschnitt mit der flexiblen sequenziellen oder parallelen Verarbeitung im zweiten Abschnitt ergibt sich eine optimale Balance zwischen Sicherheit und Effizienz. Während der erste Abschnitt für maximale Vorhersagbarkeit sorgt, ermöglicht der zweite Abschnitt eine hohe Verarbeitungsgeschwindigkeit, ohne dass zusätzliche Synchronisationsmechanismen erforderlich sind. Das System erhält somit eine klare und vorhersagbare Struktur, in der sichergestellt ist, dass sich Aufgaben nicht gegenseitig behindern. Prioritäteninversionen oder unvorhersehbare Verzögerungen durch blockierte Zugriffe können vollständig vermieden werden, während Echtzeitanforderungen zuverlässiger eingehalten werden können, da der Zugriff auf die Ressource zeitlich deterministisch erfolgt. Darüber hinaus wird die Implementierung und Wartung des Systems erleichtert, da Entwickler die Aufgaben bereits bei ihrer Zuweisung zu einem Abschnitt entsprechend ihren Anforderungen klassifizieren können. Bei parallel arbeitenden Verarbeitungskanälen sorgt die zeitlich vorhersehbare Struktur zudem dafür, dass der Synchronisationsaufwand zwischen den Kanälen reduziert werden kann oder vollständig entfällt.

In einer weiteren Ausgestaltung kann die erste Zugriffssteuerung eine synchronisierte Nebenläufigkeit der mindestens zwei Ausführungsstränge der jeweiligen ersten und zweiten Verarbeitungseinheit mit einem Zugriff auf die jeweilige gemeinsame Ressource ermöglichen.

Gemäß dieser Ausgestaltung kann die erste Zugriffssteuerung eine synchronisierte Nebenläufigkeit der mindestens zwei Ausführungsstränge mit einem Zugriff auf die gemeinsame Ressource ermöglichen. Dies bedeutet, dass auch in dem ersten Abschnitt mehrere Aufgaben parallel ausgeführt werden können, solange Mechanismen zur Zugriffskontrolle auf die gemeinsame Ressource sicherstellen, dass keine unkontrollierten Datenkonflikte oder Inkonsistenzen entstehen. Diese Mechanismen können beispielsweise durch den Einsatz von Mutexen, Semaphoren oder anderen Koordinierungstechniken implementiert werden, um sicherzustellen, dass der Zugriff auf die Ressource geregelt erfolgt.

Durch die Begrenzung dieser Zugriffskontrolle auf den ersten Abschnitt wird der Gesamtaufwand für Synchronisationsmechanismen reduziert. Während in herkömmlichen Systemen oft jede Aufgabe individuell darauf geprüft werden muss, ob sie synchronisiert werden muss oder nicht, wird gemäß dieser Ausgestaltung die Zugriffskontrolle gezielt nur für jene Aufgaben eingesetzt, die im ersten Abschnitt ausgeführt werden. Im zweiten Abschnitt hingegen sind keine zusätzlichen Synchronisationsmaßnahmen erforderlich, da in diesem Abschnitt entweder gar kein Zugriff auf die Ressource erfolgt oder ausschließlich lesende Zugriffe gestattet sind.

Dies führt zu einer effizienteren Nutzung der verfügbaren Rechenkapazitäten, da sich die Zugriffskontrolle auf einen genau definierten Bereich beschränkt. In klassischen Nebenläufigkeitssystemen, in denen jederzeit Zugriffe auf eine gemeinsame Ressource stattfinden können, entstehen oft unnötige Wartezeiten und Prioritätenkonflikte, da jede Aufgabe potenziell eine Sperre auf eine Ressource setzen oder darauf warten muss. Durch die hier vorgesehene Trennung in zwei Abschnitte wird sichergestellt, dass solche Synchronisationsmechanismen nur dann angewandt werden müssen, wenn es tatsächlich erforderlich ist.

Ein weiterer Vorteil dieser Struktur liegt in der verbesserten Skalierbarkeit des Systems. Da die Zugriffskontrolle nur innerhalb des ersten Abschnitts notwendig ist, bleibt der Verwaltungsaufwand auch dann gering, wenn die Anzahl der Aufgaben oder der Grad der Parallelität im zweiten Abschnitt erhöht werden. Dies ist besonders relevant für Systeme mit begrenzten Ressourcen, in denen ein hoher Synchronisationsaufwand zu unerwünschten Leistungseinbußen führen könnte.

Die Möglichkeit, im ersten Abschnitt eine synchronisierte Nebenläufigkeit zuzulassen, während der zweite Abschnitt vollständig frei von aufwendigen Synchronisationsmaßnahmen bleibt, stellt somit eine effiziente Lösung dar, die sowohl eine sichere als auch leistungsoptimierte Verarbeitung von Aufgaben ermöglicht. Gleichzeitig wird die Vorhersagbarkeit des Systemverhaltens verbessert, da genau festgelegt ist, wann Synchronisationsmechanismen greifen müssen und wann sie entfallen können.

Bei parallel arbeitenden Kanälen müssen in den Fällen, in denen Nebenläufigkeit im ersten Abschnitt erlaubt ist, Mechanismen zur Zugriffskontrolle kanalübergreifend synchronisiert werden. Da eine solche Synchronisation jedoch ausschließlich im ersten Abschnitt erforderlich ist und im zweiten Abschnitt entfallen kann, lässt sich durch die zeitliche Strukturierung auch eine Performancesteigerung bei parallel arbeitenden Kanälen erzielen.

In einer weiteren Ausgestaltung können die erste Verarbeitungseinheit und die zweite Verarbeitungseinheit dazu eingerichtet sein, während des zweiten Abschnitts nur Aufgaben auszuführen, die die jeweilige gemeinsame Ressource nicht verändern.

Gemäß dieser Ausgestaltung sind die Verarbeitungseinheiten so eingerichtet, dass sie während des zweiten Abschnitts ausschließlich Aufgaben ausführen, die die jeweilige gemeinsame Ressource nicht verändern. Dies bedeutet, dass in diesem Zeitraum nur lesende Zugriffe auf die Ressource erfolgen dürfen, während schreibende oder modifizierende Operationen vollständig ausgeschlossen sind. Dadurch wird sichergestellt, dass keine potenziellen Konflikte zwischen parallelen Aufgaben entstehen, die zu inkonsistenten oder unerwarteten Zuständen führen könnten.

Diese Regelung ermöglicht es, dass Aufgaben im zweiten Abschnitt parallel ausgeführt werden können, ohne dass eine Synchronisation erforderlich ist. Da keine Aufgabe die Ressource verändert, besteht keine Gefahr von Dateninkonsistenzen oder Race Conditions. Dies kann zu einer Effizienzsteigerung führen, da die Verarbeitungseinheit in dem zweiten Abschnitt mehrere Aufgaben gleichzeitig abarbeiten kann, ohne auf Sperrmechanismen oder Koordinierungsmaßnahmen angewiesen zu sein. Während in klassischen Systemen Synchronisationsmaßnahmen oft selbst für rein lesende Zugriffe erforderlich sind, um unerwartete Wechselwirkungen mit schreibenden Aufgaben zu verhindern, entfällt dieser Aufwand in dem zweiten Abschnitt vollständig.

Durch diese klare Trennung der Zugriffsarten wird zudem die Vorhersagbarkeit des Systemverhaltens verbessert. In vielen Nebenläufigkeitssystemen kann es schwierig sein, die Auswirkungen gleichzeitiger Lese- und Schreiboperationen auf eine Ressource zuverlässig zu modellieren. Dies kann dazu führen, dass unvorhersehbare Verzögerungen oder sogar Deadlocks auftreten, wenn eine Aufgabe auf eine Ressource zugreifen möchte, die gerade von einer anderen Aufgabe gesperrt ist. Indem während des zweiten Abschnitts nur lesende Aufgaben erlaubt sind, wird eine deterministische und konfliktfreie Verarbeitung sichergestellt.

Ein weiterer Vorteil dieser Ausgestaltung liegt in der verbesserten Systemstabilität. Da während des zweiten Abschnitts keine Modifikationen an der Ressource vorgenommen werden, bleibt deren Zustand über den gesamten Zeitraum hinweg unverändert. Dies kann u. a. eine Fehlersuche und Systemanalyse vereinfachen, da garantiert ist, dass alle Aufgaben im zweiten Abschnitt auf dieselben, konsistenten Daten zugreifen. In herkömmlichen Architekturen kann es vorkommen, dass eine Aufgabe Daten liest, die während der Verarbeitung von einer anderen Aufgabe verändert wurden, was zu inkonsistenten oder fehlerhaften Ergebnissen führen kann.

Die Trennung zwischen schreibenden und nicht schreibenden Aufgaben trägt außerdem dazu bei, den Verwaltungsaufwand für Synchronisationsmechanismen zu reduzieren. In vielen parallelen Systemen müssen selbst lesende Aufgaben durch Locking-Mechanismen abgesichert werden, um sicherzustellen, dass sie konsistente Daten erhalten. Dies kann zu unnötigen Verzögerungen und einer ineffizienten Nutzung der Rechenkapazität führen. Da im zweiten Abschnitt jedoch nur lesende Aufgaben ausgeführt werden, ist eine solche Absicherung nicht erforderlich. Dadurch kann das System mit einer geringeren Rechenlast arbeiten und höhere Durchsatzraten erzielen.

Diese Ausgestaltung führt somit zu einer effizienteren, stabileren und besser vorhersagbaren Nebenläufigkeit, da die strikte Trennung zwischen lesenden und schreibenden Aufgaben die Synchronisation vereinfacht und den Zugriff auf die gemeinsame Ressource ohne Konflikte ermöglicht. Dies ist insbesondere in Echtzeitsystemen von Vorteil, in denen deterministische Reaktionszeiten und eine effiziente Ressourcennutzung essenziell sind.

Bei parallel arbeitenden Kanälen sorgt die zeitlich vorhersehbare Struktur zudem dafür, dass ein Synchronisationsaufwand zwischen den Kanälen reduziert werden kann.

In einer weiteren Ausgestaltung können die zeitlich voneinander getrennten Abschnitte periodisch wechseln.

Gemäß dieser Ausgestaltung wechseln die zeitlich voneinander getrennten Abschnitte periodisch, sodass der Zugriff auf die gemeinsame Ressource in einem vorhersehbaren und regelmäßigen Rhythmus geregelt wird. Durch diesen zyklischen Wechsel zwischen einem Abschnitt, in dem die Ressource verändert werden darf, und einem Abschnitt, in dem sie nur lesend genutzt wird oder gar kein Zugriff erfolgt, entsteht ein strukturiertes und deterministisches Zugriffsschema.

Ein Vorteil dieses periodischen Wechsels liegt in der verbesserten Planbarkeit der Systemabläufe. Da das Umschalten zwischen den Abschnitten in festgelegten Zeitintervallen erfolgt, können Aufgaben gezielt so organisiert werden, dass ihre Verarbeitung optimal mit den jeweiligen Zugriffsrechten übereinstimmt. Dies ermöglicht eine präzise Steuerung der Nebenläufigkeit, ohne dass auf komplexe Priorisierungsmechanismen oder aufwendige Synchronisationsprotokolle zurückgegriffen werden muss.

Die Regelmäßigkeit des Abschnittswechsels trägt dazu bei, die Latenz für Aufgaben, die auf eine Ressource zugreifen müssen, zu minimieren. In herkömmlichen Systemen mit klassischen Sperrmechanismen kann es zu unvorhersehbaren Verzögerungen kommen, wenn eine Aufgabe darauf warten muss, dass eine andere ihre Sperre freigibt. Durch die periodische Struktur ist hingegen sichergestellt, dass Schreibzugriffe innerhalb eines genau definierten Zeitraums erfolgen können und Lesezugriffe ebenso zuverlässig in einem separaten Zeitfenster abgearbeitet werden.

Ein weiterer Vorteil dieser Ausgestaltung besteht darin, dass die Systemlast gleichmäßiger verteilt werden kann. Da der Zugriff auf die Ressource in regelmäßigen Intervallen organisiert ist, lassen sich Engpässe vermeiden, die in traditionellen Nebenläufigkeitssystemen häufig auftreten, wenn mehrere hochpriorisierte Aufgaben gleichzeitig um den Zugriff auf eine Ressource konkurrieren. Durch die zyklische Struktur werden Konflikte von vornherein reduziert, da Aufgaben im Voraus so eingeplant werden können, dass sie sich nicht gegenseitig behindern.

Die Vorhersagbarkeit, die sich aus dem periodischen Wechsel ergibt, ist besonders vorteilhaft für Echtzeitsysteme, in denen deterministische Reaktionszeiten entscheidend sind. Da zu jeder Zeit klar ist, wann schreibende und wann lesende Zugriffe erlaubt sind, können Systementwickler die Verarbeitung von Aufgaben präzise abstimmen, um sicherzustellen, dass kritische Prozesse zuverlässig innerhalb ihrer vorgegebenen Zeitrahmen abgeschlossen werden.

Durch diese periodische Umschaltung der Abschnitte wird die Notwendigkeit zur Laufzeit aufwendiger Synchronisationsmaßnahmen erheblich reduziert. Während in herkömmlichen Systemen jedes Mal geprüft werden muss, ob eine Aufgabe auf eine Ressource zugreifen darf oder nicht, erfolgt diese Steuerung hier durch ein festgelegtes Zeitmuster. Dies verringert den Overhead für die Zugriffskontrolle und verbessert die Gesamteffizienz des Systems.In einer weiteren Ausgestaltung ist die Dauer des ersten und/oder zweiten Abschnitts dynamisch in Abhängigkeit von der Systemauslastung oder einer externen Steuergröße anpassbar.

Gemäß dieser Ausgestaltung kann die Dauer des ersten und/oder zweiten Abschnitts dynamisch in Abhängigkeit von der Systemauslastung oder einer externen Steuergröße angepasst werden. Dies bedeutet, dass die Zeitintervalle, in denen entweder schreibende oder ausschließlich lesende Zugriffe auf die gemeinsame Ressource erfolgen, nicht starr vorgegeben sind, sondern flexibel an die aktuellen Betriebsbedingungen des Systems angepasst werden können.

Durch diese Dynamik kann das System effizienter auf wechselnde Anforderungen reagieren. In Phasen hoher Schreibaktivität kann die Dauer des ersten Abschnitts verlängert werden, um sicherzustellen, dass alle notwendigen Modifikationen an der Ressource innerhalb eines Zeitraums erfolgen, der den aktuellen Arbeitslasten entspricht. Umgekehrt kann der zweite Abschnitt ausgeweitet werden, wenn vorrangig lesende Aufgaben anstehen, sodass mehr Prozesse parallel arbeiten können, ohne auf schreibende Operationen warten zu müssen.

Diese Anpassungsfähigkeit führt zu einer besseren Ressourcennutzung, da das System sich nicht nach einem starren Zeitplan richten muss, sondern flexibel auf sich verändernde Bedingungen eingehen kann. Besonders in dynamischen Echtzeitsystemen, in denen sich die Lastverhältnisse fortlaufend ändern, erlaubt diese Regelung eine optimierte Nutzung der verfügbaren Rechenkapazität. Kritische Aufgaben können bevorzugt behandelt werden, indem die Dauer der Abschnitte an die aktuelle Priorisierung innerhalb des Systems angepasst wird.

Ein weiterer Vorteil dieser Anpassungsfähigkeit liegt in der Reduktion von Wartezeiten. In Systemen mit fester Abschnittsdauer kann es vorkommen, dass ein Abschnitt zu früh endet, während noch schreibende oder lesende Aufgaben offen sind. In anderen Fällen kann es geschehen, dass ein Abschnitt länger andauert, als tatsächlich erforderlich wäre, wodurch ungenutzte Kapazitäten entstehen. Die Möglichkeit einer dynamischen Anpassung stellt sicher, dass jeder Abschnitt genau so lange aktiv bleibt, wie es für einen effizienten Betrieb erforderlich ist.

Darüber hinaus kann die Dauer der Abschnitte auf externe Steuergrößen abgestimmt werden. So kann beispielsweise eine Priorisierung bestimmter Systemprozesse oder eine externe Signalquelle, etwa aus einer übergeordneten Steuerung oder einem Monitoring-System, Einfluss auf die Zeitsteuerung nehmen. Dies ermöglicht eine intelligente Anpassung der Systemverarbeitung an äußere Betriebsbedingungen, etwa in Abhängigkeit von Lastspitzen oder variierenden Echtzeitanforderungen.

In einer weiteren Ausgestaltung kann vorgesehen sein, dass der zweite Abschnitt erst dann beginnt, wenn alle Aufgaben, die dem ersten Abschnitt zugeordnet sind, vollständig abgearbeitet wurden. Dabei erfolgt der Übergang zwischen den Abschnitten somit nicht zeitgesteuert, sondern zustandsbasiert, das heißt abhängig vom Abschluss aller im ersten Abschnitt vorgesehenen Aufgaben.

Gemäß dieser Ausgestaltung wird sichergestellt, dass schreibende Zugriffe auf die gemeinsame Ressource vollständig abgeschlossen sind, bevor nur-lesende Zugriffe im zweiten Abschnitt erlaubt werden. Dadurch wird eine klare Trennung zwischen potenziell modifizierenden und rein lesenden Zugriffen gewährleistet, was die Datenkonsistenz erhöht und race conditions vermeidet. Gleichzeitig entfällt die Notwendigkeit, einen sicheren Abschnittswechsel durch zyklische Timer oder externe Steuerereignisse zu triggern, da der Zustand des Systems selbst den Wechsel definiert. Dies vereinfacht die Ablaufsteuerung in sicherheitskritischen Anwendungen und erhöht die Robustheit der Steuerungsvorrichtung, insbesondere bei unregelmäßiger oder lastabhängiger Aufgabenverteilung.

In einer weiteren Ausgestaltung können die erste Verarbeitungseinheit und die zweite Verarbeitungseinheit dazu eingerichtet sein, den Wechsel zwischen dem ersten und dem zweiten Abschnitt durch ein Echtzeitsteuerungssignal zu synchronisieren.

Gemäß dieser Ausgestaltung können die Verarbeitungseinheiten den Wechsel zwischen dem ersten und dem zweiten Abschnitt durch ein Echtzeitsteuerungssignal synchronisieren. Dieses Signal dient als zentrale Steuergröße, um den Übergang zwischen schreibenden und nicht schreibenden Zugriffen auf die gemeinsame Ressource exakt zu koordinieren. Anstelle eines festen Zeitrasters oder einer internen, von der Systemauslastung abhängigen Regelung erfolgt der Wechsel somit durch ein externes oder systemintern generiertes Signal, das sicherstellt, dass der Übergang präzise und deterministisch erfolgt.

Ein Vorteil dieser Synchronisation liegt in der verbesserten Steuerbarkeit der Zugriffszeiten. Da das Echtzeitsteuerungssignal gezielt ausgelöst werden kann, ist es möglich, den Wechsel zwischen den Abschnitten exakt an die aktuellen Betriebsanforderungen anzupassen. Dies kann beispielsweise durch eine übergeordnete Steuerung oder ein Ereignis im System erfolgen, das signalisiert, dass alle schreibenden Aufgaben abgeschlossen sind oder dass ein kritischer Lesevorgang unmittelbar bevorsteht. Dadurch wird sichergestellt, dass die Abschnitte nicht nur effizient genutzt werden, sondern auch exakt auf den Bedarf des Systems abgestimmt sind.

Ein weiterer Vorteil ergibt sich aus der verbesserten Synchronisation mehrerer parallel arbeitender Prozesse. In vielen Nebenläufigkeitssystemen kann es schwierig sein, sicherzustellen, dass alle Aufgaben zum richtigen Zeitpunkt in den richtigen Modus wechseln. Durch die Verwendung eines Echtzeitsteuerungssignals wird gewährleistet, dass alle beteiligten Prozesse exakt gleichzeitig den Abschnittswechsel vollziehen. Dies verhindert potenzielle Inkonsistenzen oder Verzögerungen, die auftreten könnten, wenn einzelne Prozesse asynchron zwischen den Abschnitten wechseln.

Besonders in sicherheitskritischen oder hochverfügbaren Automatisierungssystemen kann die präzise Synchronisation durch ein Echtzeitsteuerungssignal entscheidende Vorteile bieten. In Anwendungen, in denen der Systemzustand zu einem exakt definierten Zeitpunkt konsistent sein muss, ermöglicht diese Steuerungsmethode eine garantierte Übergabe zwischen schreibenden und nicht schreibenden Phasen. Dadurch können sicherheitskritische Prozesse ohne Risiko für Dateninkonsistenzen ausgeführt werden, da sichergestellt ist, dass zu einem bestimmten Zeitpunkt keine konkurrierenden Schreib- und Lesezugriffe stattfinden.

In einer weiteren Ausgestaltung können die erste Verarbeitungseinheit und die zweite Verarbeitungseinheit jeweils dazu eingerichtet sein, den Wechsel zwischen dem ersten und dem zweiten Abschnitt zwischen dem ersten Verarbeitungskanal A und dem zweiten Verarbeitungskanal B zu synchronisieren.

Gemäß dieser Ausgestaltung sind die erste Verarbeitungseinheit und die zweite Verarbeitungseinheit jeweils so eingerichtet, dass sie den Wechsel zwischen dem ersten und dem zweiten Abschnitt zwischen den beiden Verarbeitungskanälen A und B synchronisieren. Dies bedeutet, dass beide Kanäle ihren Abschnittswechsel gleichzeitig vollziehen, sodass sichergestellt ist, dass sich beide Kanäle stets im gleichen Zugriffsmodus befinden - entweder im lesenden oder im schreibenden Abschnitt.

Ein Vorteil dieser Synchronisation besteht darin, dass dadurch kanalübergreifende Konsistenzbedingungen einfacher eingehalten werden können. Da zu jedem Zeitpunkt klar ist, ob sich beide Kanäle im Lese- oder Schreibmodus befinden, lassen sich Wechselwirkungen zwischen den Kanälen gezielt vermeiden. Insbesondere bei Systemen mit gemeinsamen oder spiegelnden Ressourcen, bei denen ein konsistenter Zustand beider Kanäle erforderlich ist, ermöglicht die synchronisierte Abschnittssteuerung eine deterministische und koordinierte Bearbeitung der Aufgaben.

In einer weiteren Ausgestaltung können die erste Verarbeitungseinheit und die zweite Verarbeitungseinheit dazu eingerichtet sein, im ersten Abschnitt eine Priorisierung der Aufgaben anhand einer vorgegebenen Prioritätsregel durchzuführen.

Gemäß dieser Ausgestaltung können die Verarbeitungseinheiten im ersten Abschnitt eine Priorisierung der Aufgaben anhand einer vorgegebenen Prioritätsregel durchführen. Dies bedeutet, dass Aufgaben innerhalb des Zeitraums, in dem schreibende Zugriffe auf die gemeinsame Ressource erlaubt sind, nicht nur sequenziell oder synchronisiert abgearbeitet werden, sondern auch nach einer festgelegten Prioritätslogik geordnet werden. Die Prioritätsregel kann beispielsweise auf der Basis von Echtzeitanforderungen, der Kritikalität einer Aufgabe oder der erwarteten Ausführungsdauer definiert werden.

Durch diese Priorisierung kann sichergestellt werden, dass zeitkritische oder besonders wichtige Aufgaben bevorzugt ausgeführt werden, während weniger dringliche Prozesse entsprechend zurückgestellt werden können. Dies trägt dazu bei, dass Systemreaktionen innerhalb der gewünschten Zeitvorgaben bleiben und Verzögerungen vermieden werden, die durch eine ungünstige Reihenfolge der Aufgaben entstehen könnten. Besonders in Echtzeitsystemen, in denen bestimmte Prozesse innerhalb fester Zeitgrenzen abgeschlossen sein müssen, bietet diese Regelung den Vorteil, dass priorisierte Aufgaben stets bevorzugt behandelt werden, ohne dass unkontrollierte Wartezeiten durch niedrigpriorisierte Prozesse entstehen.

Ein weiterer Vorteil dieser Priorisierung liegt in der besseren Ressourcennutzung. Da Aufgaben mit hoher Priorität früher ausgeführt werden, können Blockaden innerhalb des Systems reduziert werden. In herkömmlichen Nebenläufigkeitssystemen kann es vorkommen, dass eine hochpriorisierte Aufgabe auf eine Ressource warten muss, während eine weniger dringliche Aufgabe sie gerade nutzt. Durch eine gezielte Ordnung der Ausführungsreihenfolge wird sichergestellt, dass solche Verzögerungen minimiert werden und die Effizienz der Ressourcennutzung verbessert wird.

Die Möglichkeit, eine definierte Prioritätsregel zu verwenden, trägt auch zur besseren Vorhersagbarkeit des Systemverhaltens bei. Da die Reihenfolge der Abarbeitung nicht rein zufällig oder nach einem First-Come-First-Serve-Prinzip erfolgt, sondern durch ein prioritätsgesteuertes Verfahren bestimmt wird, können Entwickler und Systemplaner genau abschätzen, wann welche Aufgabe abgearbeitet wird. Dies erleichtert nicht nur die Systemanalyse und Optimierung, sondern ermöglicht auch eine gezielte Anpassung an spezifische Anforderungen eines Automatisierungssystems.

In einer weiteren Ausgestaltung kann die erste Zugriffssteuerung eine Sperrmechanismus-Überprüfung aufweisen, um sicherzustellen, dass in dem ersten Abschnitt ausschließlich eine sequenzielle Abarbeitung der Aufgaben erfolgt.

Gemäß dieser Ausgestaltung kann die erste Zugriffssteuerung eine Sperrmechanismus-Überprüfung aufweisen, um sicherzustellen, dass in dem ersten Abschnitt ausschließlich eine sequenzielle Abarbeitung der Aufgaben erfolgt. Diese Überprüfung stellt sicher, dass zu jedem Zeitpunkt immer nur eine Aufgabe auf die gemeinsame Ressource zugreift und konkurrierende Zugriffe verhindert werden. Die Sperrmechanismus-Überprüfung kann so gestaltet sein, dass sie vor der Bearbeitung jeder neuen Aufgabe prüft, ob aktuell eine andere Aufgabe die Ressource belegt. Erst wenn sichergestellt ist, dass die vorherige Aufgabe abgeschlossen ist und keinen Zugriff mehr auf die Ressource ausübt, wird die nächste Aufgabe zur Ausführung freigegeben. Dies kann durch ein internes Status-Flag, durch eine zentrale Verwaltungseinheit oder durch spezielle Hardware-Mechanismen realisiert werden, die den Zugriff auf die Ressource koordinieren. Ein Vorteil dieser Überprüfung liegt in der Gewährleistung der Datenintegrität. Da schreibende Aufgaben im ersten Abschnitt ausschließlich sequenziell abgearbeitet werden, wird verhindert, dass zwei oder mehr Aufgaben gleichzeitig versuchen, die Ressource zu verändern, was zu inkonsistenten Zuständen oder unerwarteten Fehlern führen könnte. Die Überprüfung sorgt somit für eine geordnete und sichere Verarbeitung, ohne dass komplexe Nebenläufigkeitsmechanismen erforderlich sind.

Diese Maßnahme verbessert zudem die Vorhersagbarkeit des Systemverhaltens. In herkömmlichen Nebenläufigkeitssystemen kann es schwierig sein, die tatsächliche Reihenfolge der Zugriffe auf eine Ressource genau vorherzusagen, insbesondere wenn mehrere parallel laufende Prozesse involviert sind. Durch die Sperrmechanismus-Überprüfung wird sichergestellt, dass die Verarbeitung streng sequenziell erfolgt, sodass Entwickler und Systemplaner genau berechnen können, wann eine bestimmte Aufgabe abgeschlossen sein wird und wann die nächste Aufgabe beginnen kann.

Darüber hinaus reduziert diese Ausgestaltung den Synchronisationsaufwand innerhalb des Systems. Während herkömmliche Multithreading-Systeme oft auf Mechanismen wie Locks, Semaphoren oder Prioritätenvererbung angewiesen sind, um konkurrierende Zugriffe zu steuern, wird dieser Aufwand hier minimiert. Die Sperrmechanismus-Überprüfung stellt sicher, dass solche Mechanismen nur innerhalb des ersten Abschnitts angewendet werden müssen und nicht auf den gesamten Systembetrieb ausgedehnt werden müssen. Dadurch werden potenzielle Wartezeiten reduziert und die Effizienz der Verarbeitung erhöht.

In einer weiteren Ausgestaltung kann die zweite Zugriffssteuerung eine Prüfkomponente aufweisen, die sicherstellt, dass keine Aufgabe in dem zweiten Abschnitt die jeweilige gemeinsame Ressource verändert.

Gemäß dieser Ausgestaltung kann die zweite Zugriffssteuerung eine Prüfkomponente aufweisen, die sicherstellt, dass keine Aufgabe in dem zweiten Abschnitt die gemeinsame Ressource verändert. Diese Prüfkomponente dient dazu, sicherzustellen, dass im zweiten Abschnitt ausschließlich lesende Zugriffe auf die Ressource erfolgen und keine unbeabsichtigten Schreibzugriffe stattfinden, die zu Inkonsistenzen oder unerwarteten Systemverhalten führen könnten.

Die Implementierung einer solchen Prüfkomponente kann auf verschiedene Weise erfolgen. Eine Möglichkeit besteht darin, dass die Verarbeitungseinheit bei der Zuweisung einer Aufgabe zum zweiten Abschnitt eine explizite Kennzeichnung der Aufgabe überprüft, die angibt, ob diese nur lesende oder auch schreibende Operationen ausführt. Alternativ kann die Prüfkomponente auf Hardware- oder Softwareebene direkt in die Speicherzugriffsverwaltung integriert sein, sodass Schreiboperationen innerhalb des zweiten Abschnitts blockiert oder abgefangen werden, bevor sie ausgeführt werden.

Ein weiteres Implementierungskonzept besteht in der Verwendung von Speicherschutzmechanismen oder speziellen Speicherbereichen, die während des zweiten Abschnitts nur lesend zugänglich sind. Die Prüfkomponente kann in diesem Fall durch eine automatische Speicherzugriffskontrolle realisiert werden, die Schreibbefehle in diesem Zeitraum erkennt und entweder verhindert oder zu einem Fehlerzustand führt. Dadurch kann sichergestellt werden, dass keine Aufgabe versehentlich die Ressource verändert.

In einer weiteren Ausgestaltung können die erste Verarbeitungseinheit und die zweite Verarbeitungseinheit dazu eingerichtet sein, den Wechsel zwischen dem ersten und dem zweiten Abschnitt in Abhängigkeit von einer maximal zulässigen Verzögerung eines Echtzeitsystems durchzuführen.

Gemäß dieser Ausgestaltung können die Verarbeitungseinheiten den Wechsel zwischen dem ersten und dem zweiten Abschnitt in Abhängigkeit von einer maximal zulässigen Verzögerung eines Echtzeitsystems durchführen. Dies bedeutet, dass der Übergang zwischen den beiden Abschnitten nicht nur durch eine festgelegte Zeitdauer oder ein Steuerungssignal bestimmt wird, sondern zusätzlich unter Berücksichtigung einer vorgegebenen Zeitgrenze erfolgt, innerhalb derer kritische Aufgaben abgeschlossen sein müssen.

Durch diese Regelung wird sichergestellt, dass Echtzeitanforderungen jederzeit eingehalten werden. Falls sich beispielsweise eine Verzögerung durch eine unerwartet lange Verarbeitung innerhalb des ersten Abschnitts ergibt, kann das System den Wechsel erzwingen, um sicherzustellen, dass der zweite Abschnitt innerhalb der vorgegebenen Zeit ausgeführt wird. Dadurch wird verhindert, dass Aufgaben, die auf lesende Zugriffe angewiesen sind, übermäßig lange warten müssen, was in zeitkritischen Anwendungen zu unerwünschten Verzögerungen führen könnte.

In einer weiteren Ausgestaltung können die erste Verarbeitungseinheit und die zweite Verarbeitungseinheit dazu eingerichtet sein, die Zuweisung der Aufgaben zu den Abschnitten adaptiv anhand eines Lernalgorithmus oder eines heuristischen Verfahrens zu optimieren.

Gemäß dieser Ausgestaltung können die Verarbeitungseinheiten die Zuweisung der Aufgaben zu den Abschnitten adaptiv anhand eines Lernalgorithmus oder eines heuristischen Verfahrens optimieren. Anstatt eine starre Regel zur Einteilung der Aufgaben in den ersten oder zweiten Abschnitt zu verwenden, analysiert das System dynamisch das Verhalten der Aufgaben, ihre Zugriffsmuster auf die gemeinsame Ressource sowie ihre Laufzeiten und passt die Zuweisung entsprechend an.

Durch den Einsatz eines Lernalgorithmus kann das System über eine kontinuierliche Analyse von Ausführungsdaten optimierte Muster erkennen. Wenn beispielsweise bestimmte Aufgaben regelmäßig lange Bearbeitungszeiten oder hohe Synchronisationsanforderungen im ersten Abschnitt verursachen, kann der Algorithmus Anpassungen vornehmen, indem er ähnliche zukünftige Aufgaben auf andere Art verteilt oder deren Reihenfolge optimiert. Dies führt zu einer effizienteren Nutzung der Abschnitte und verhindert unnötige Verzögerungen.

Ein heuristisches Verfahren kann genutzt werden, um anhand vordefinierter Kriterien schnelle und effektive Entscheidungen über die optimale Zuweisung der Aufgaben zu treffen. Dabei können Parameter wie die erwartete Dauer einer Aufgabe, die Häufigkeit von Ressourcenzugriffen oder die Parallelisierbarkeit berücksichtigt werden. Durch eine adaptive Optimierung kann das System flexibel auf wechselnde Lastsituationen reagieren und sicherstellen, dass sowohl die Ressourcennutzung als auch die Systemleistung maximiert werden.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert.
Fig. 1 zeigt in einer schematischen Darstellung ein Beispiel für herkömmliche synchronisierte Nebenläufigkeit.
Fig. 2 zeigt in einer schematischen Darstellung ein Beispiel für eine synchronisierte Nebenläufigkeit in einem einzelnen Verarbeitungskanal gemäß einem Ausführungsbeispiel der vorliegenden Offenbarung.
Fig. 3 zeigt in einer schematischen Darstellung ein Beispiel für herkömmliche synchronisierte Nebenläufigkeit in zwei parallel arbeitenden Verarbeitungskanälen und deren Synchronisation untereinander.
Fig. 4 zeigt in einer schematischen Darstellung ein Beispiel für eine synchronisierte Nebenläufigkeit in zwei Verarbeitungskanälen gemäß einem Ausführungsbeispiel der vorliegenden Offenbarung.
Fig. 5 zeigt in einem Blockdiagramm eine einkanalige Steuerungsvorrichtung für ein Automatisierungssystem mit zeitlich vorhersagbarer Zugriffssteuerung.
Fig. 6 zeigt in einem Blockdiagramm eine zweikanalige Steuerungsvorrichtung für ein Automatisierungssystem mit zeitlich vorhersagbarer Zugriffssteuerung.
Fig. 7 zeigt in einem Blockdiagramm ein Verfahren zum Steuern eines Automatisierungssystems bei einkanaliger Verarbeitung.
Fig. 8 zeigt in einem Blockdiagramm ein Verfahren zum Steuern eines Automatisierungssystems bei zweikanaliger Verarbeitung.

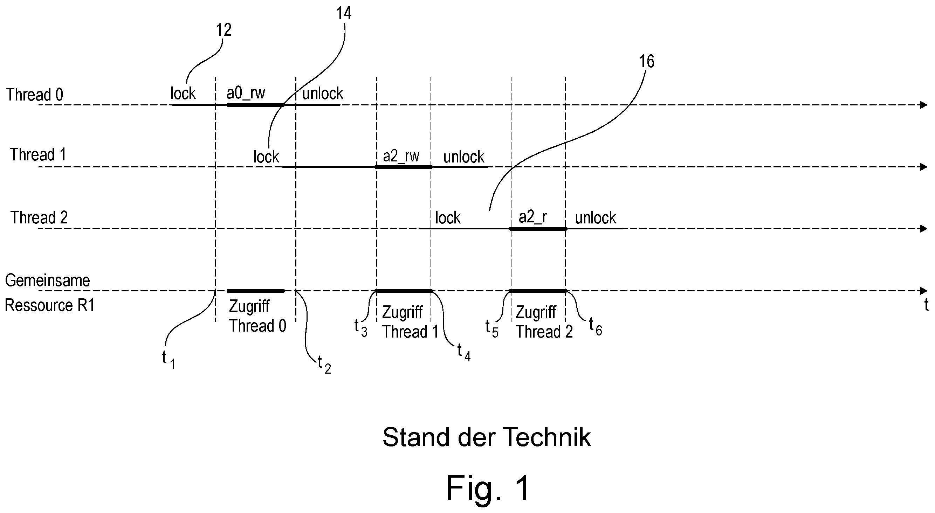

Fig. 1 zeigt in einer schematischen Darstellung ein Beispiel für herkömmliche synchronisierte Nebenläufigkeit. Die Abbildung veranschaulicht, wie mehrere parallele Ausführungsstränge, auch als Threads bezeichnet, zeitlich auf eine gemeinsame Ressource R1 zugreifen. In diesem Beispiel sind drei Threads dargestellt, nämlich Thread 0, Thread 1 und Thread 2, die jeweils unterschiedliche Zugriffsrechte auf die gemeinsame Ressource haben. Während Thread 0 und Thread 1 sowohl lesende als auch schreibende Zugriffe auf die Ressource R1 durchführen können, ist Thread 2 auf reine Lesezugriffe beschränkt.

Um die Datenintegrität der Ressource R1 sicherzustellen und Inkonsistenzen durch gleichzeitige Zugriffe mehrerer Threads zu vermeiden, wird eine Zugriffssteuerung mit gegenseitigem Ausschluss (engl. mutual exclusion) implementiert. Diese Zugriffssteuerung stellt sicher, dass zu jedem Zeitpunkt immer nur ein einziger Thread exklusiven Zugriff auf die Ressource R1 erhält. In diesem Beispiel erfolgt die Synchronisation über einen Sperrmechanismus in Form von Mutexen (engl. mutual exclusion locks). Ein Mutex ist eine Synchronisationsprimitive, die dazu dient, konkurrierende Threads voneinander zu isolieren, indem sie den Zugriff auf eine Ressource sequenziell steuert.

Der Ablauf eines typischen Zugriffs auf die Ressource R1 unter Verwendung von Mutexen ist wie folgt: Thread 0 fordert zu Zeitpunkt T1 das Lock 12 an und erhält exklusiven Zugriff auf die Ressource R1. Während dieser Zeit kann kein anderer Thread auf die Ressource zugreifen. Thread 0 führt sowohl Lese- als auch Schreiboperationen durch und gibt das Lock 12 erst zum Zeitpunkt T2 wieder frei.

Währenddessen hat Thread 1 ebenfalls einen Zugriff auf R1 angefordert, kann jedoch erst aktiv werden, nachdem Thread 0 das Lock 12 freigegeben hat. Erst nach dieser Freigabe erhält Thread 1 das Lock 14 und kann ab Zeitpunkt T3 auf die Ressource R1 zugreifen. Nach Abschluss seiner Operationen gibt Thread 1 das Lock 14 zum Zeitpunkt T4 frei.

Parallel dazu hat Thread 2, der lediglich lesende Zugriffe auf die Ressource R1 ausführt, während des Zugriffs von Thread 1 ebenfalls eine Zugriffsanfrage gestellt. Auch Thread 2 muss warten, bis Thread 1 seinen Zugriff abgeschlossen hat und das Lock 14 freigibt. Erst dann erhält Thread 2 das Lock 16 und kann zum Zeitpunkt T5 die Ressource R1 lesen. Nach Abschluss der Leseoperation gibt Thread 2 das Lock zum Zeitpunkt T6 wieder frei, sodass ein anderer Thread darauf zugreifen kann.

Der dargestellte Ablauf verdeutlicht, dass durch die Verwendung von Mutexen sichergestellt wird, dass immer nur ein Thread zur gleichen Zeit Zugriff auf die Ressource R1 erhält. Diese kontrollierte, sequenzielle Zugriffskontrolle gewährleistet, dass keine unkontrollierten oder konkurrierenden Schreibzugriffe stattfinden, wodurch die Konsistenz der Ressource erhalten bleibt. Allerdings zeigt sich hierbei auch eine wesentliche Einschränkung dieses Synchronisationsansatzes. Da alle Zugriffe - einschließlich rein lesender Operationen - über den Sperrmechanismus geregelt werden müssen, entstehen Wartezeiten, auch wenn ein Zugriff keine Veränderung der Ressource verursacht. Dies führt zu einer potenziellen Leistungsineffizienz, da auch Leseoperationen durch Sperrmechanismen blockiert werden, obwohl sie keinen direkten Konflikt mit anderen Leseoperationen verursachen würden.

Fig. 1 illustriert damit die grundsätzlichen Mechanismen und Herausforderungen der synchronisierten Nebenläufigkeit in herkömmlichen Systemen, bei denen Mutexe als Zugriffssteuerung eingesetzt werden, um konkurrierende Zugriffe auf eine gemeinsame Ressource zu koordinieren und deren Konsistenz sicherzustellen. Die Zugriffe auf die gemeinsame Ressource können wahlfrei und zeitlich unvorhergesehen erfolgen.

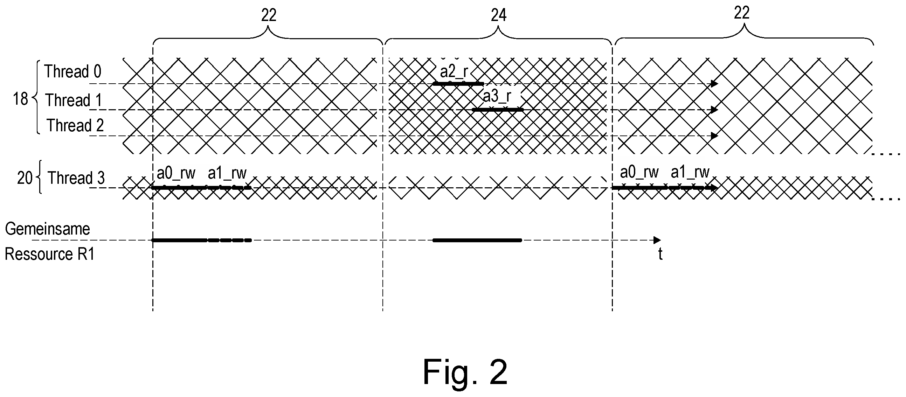

Fig. 2 zeigt in einer schematischen Darstellung ein Beispiel für eine synchronisierte Nebenläufigkeit in einem einzelnen Verarbeitungskanal gemäß einem Ausführungsbeispiel der vorliegenden Offenbarung. Fig. 2 illustriert ein System, in dem der Zugriff auf eine gemeinsame Ressource R1 durch eine zeitliche Trennung von Lese- und Schreiboperationen gesteuert wird, wodurch Konflikte zwischen parallelen Ausführungssträngen vermieden und die Konsistenz der Ressource sichergestellt werden.

In Fig. 2 sind vier Ausführungsstränge dargestellt, die als Thread 0 bis Thread 3 bezeichnet sind. Diese Threads sind zwei verschiedenen Gruppen zugeordnet, die unterschiedliche Zugriffsrechte auf die gemeinsame Ressource R1 besitzen. Die erste Gruppe 18 umfasst Threads, die ausschließlich lesende Operationen auf die Ressource R1 ausführen dürfen, während die zweite Gruppe 20 Threads enthält, die sowohl lesende als auch schreibende Zugriffe auf die Ressource durchführen können. Im dargestellten Beispiel gehören Thread 0, Thread 1 und Thread 2 zur ersten Gruppe 18, während Thread 3 der zweiten Gruppe 20 zugeordnet ist.

Die Verarbeitung der Threads erfolgt in definierten, voneinander getrennten Zeitabschnitten. Die Threads der zweiten Gruppe 20 werden innerhalb eines ersten Zeitabschnitts 22 ausgeführt, während die Threads der ersten Gruppe 18 innerhalb eines zweiten Zeitabschnitts 24 arbeiten. Diese strikte Trennung der Zeitabschnitte stellt sicher, dass während des ersten Zeitabschnitts 22 ausschließlich die Threads der zweiten Gruppe 20 auf die Ressource R1 zugreifen dürfen, wobei sowohl Lese- als auch Schreibzugriffe möglich sind. Im Gegensatz dazu haben während des zweiten Zeitabschnitts 24 nur die Threads der ersten Gruppe 18 Zugriff auf die Ressource, wobei ausschließlich lesende Zugriffe erlaubt sind.

Die hier verwendete Anzahl der Threads ist lediglich exemplarisch und nicht als Einschränkung zu verstehen. Das System kann eine beliebige Anzahl von Threads aufweisen, die jeweils einer der beiden Gruppen zugeordnet werden. Unabhängig von der tatsächlichen Anzahl der Threads bleibt die grundsätzliche Regelung bestehen, dass alle Threads einer Gruppe innerhalb des jeweils zugewiesenen Zeitabschnitts arbeiten und die Ressource ausschließlich gemäß den für diesen Abschnitt geltenden Zugriffsrechten nutzen dürfen.

Die beiden Zeitabschnitte sind voneinander isoliert, sodass während des ersten Zeitabschnitts 22 die Threads der ersten Gruppe 18 inaktiv bleiben, zumindest insofern es ihren Zugriff auf die gemeinsame Ressource betrifft. Ebenso haben während des zweiten Zeitabschnitts 24 die Threads der zweiten Gruppe 20 keinen Zugriff auf die Ressource R1. Diese Aufteilung stellt sicher, dass die Ressource R1 nur in einem vordefinierten Zeitraum verändert werden kann, während in einem separaten Zeitraum ausschließlich lesende Zugriffe erfolgen. In diesem Zusammenhang kann der erste Zeitabschnitt 22 als der Abschnitt betrachtet werden, in dem die gemeinsame Ressource verändert werden darf, während der zweite Zeitabschnitt 24 als Abschnitt dient, in dem die gemeinsame Ressource nicht verändert werden darf.

Im dargestellten Beispiel erfolgen während des ersten Zeitabschnitts 22 zwei Zugriffe a0_rw und a1_rw auf die gemeinsame Ressource R1. Da diese Zugriffe sowohl Lese- als auch Schreiboperationen umfassen, können sie den Zustand der Ressource verändern. Um sicherzustellen, dass keine Konflikte zwischen konkurrierenden Schreibzugriffen entstehen, werden diese Operationen streng sequenziell ausgeführt. Eine Möglichkeit, dies zu erreichen, besteht darin, der zweiten Gruppe 20 nur einen einzelnen Thread zuzuweisen, wodurch ein paralleler Zugriff automatisch ausgeschlossen wird. Alternativ kann, falls mehrere Threads der zweiten Gruppe 20 zugeordnet sind, eine synchronisierte Nebenläufigkeit implementiert werden, wie sie bspw. in Fig. 1 beschrieben ist, um sicherzustellen, dass die Zugriffe dennoch sequenziell erfolgen.

Im zweiten Zeitabschnitt 24 erfolgen die Zugriffe a2_r und a3_r auf die gemeinsame Ressource R1. Diese Zugriffe sind rein lesender Natur, sodass der Zustand der Ressource unverändert bleibt. Da keine schreibenden Operationen stattfinden, besteht keine Notwendigkeit für eine sequenzielle Zugriffskontrolle. Die Zugriffe auf die Ressource R1 können daher sequenziell oder parallel erfolgen, ohne dass die Konsistenz der Ressource gefährdet wird. Dies ist vorteilhaft gegenüber klassischen Synchronisationsmechanismen, bei denen selbst lesende Zugriffe häufig über Sperrmechanismen reguliert werden müssen, um Dateninkonsistenzen zu vermeiden. Da im zweiten Zeitabschnitt 24 nur lesende Operationen erlaubt sind, entfällt die Notwendigkeit zusätzlicher Kontrollmechanismen zur Synchronisation.

Die Zeitabschnitte 22 und 24 können sich abwechseln, jedoch ohne Überlappung. Dies bedeutet, dass nach dem Abschluss eines zweiten Zeitabschnitts 24 erneut ein erster Zeitabschnitt 22 folgen kann, wie aus der Darstellung der Fig. 2 ersichtlich. Diese zyklische Struktur sorgt für eine vorhersehbare, deterministische Verarbeitung, bei der sich schreibende und lesende Zugriffe nicht gegenseitig blockieren. Durch diese Trennung wird nicht nur die Systemleistung optimiert, sondern auch die Stabilität der Ressourcennutzung verbessert, da Prioritäteninversionen und unkontrollierte Zugriffsverzögerungen vermieden werden.

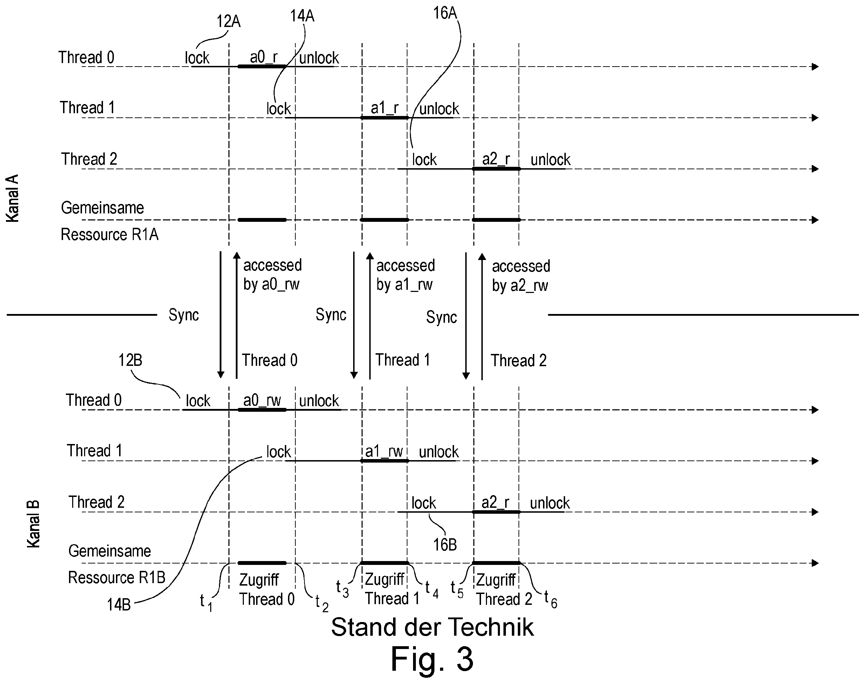

Fig. 3 zeigt in einer schematischen Darstellung ein Beispiel für herkömmliche synchronisierte Nebenläufigkeit in zwei parallel arbeitenden Verarbeitungskanälen und deren Synchronisation untereinander.

Ein erster Verarbeitungskanal ist hier als Kanal A bezeichnet und ein zweiter Verarbeitungskanal als Kanal B. Jeder Kanal ist eigenständig ausgebildet und kann über eine Verarbeitungseinheit zum Ausführen von Aufgaben verfügen. Der erste Verarbeitungskanal A und der zweite Verarbeitungskanal B können für eine redundante Abarbeitung von Aufgaben ausgelegt sein, d. h., in beiden Kanälen werden die gleichen Aufgaben parallel zueinander abgearbeitet. Durch die parallele Bearbeitung der Aufgaben und einen Abgleich der resultierenden Ergebnisse kann auf eine korrekte und fehlerfreie Bearbeitung der Aufgaben geschlossen werden. Schlägt der Abgleich fehl, ist von einem Fehler in einem der Kanäle auszugehen, woraufhin eine entsprechende Reaktion ausgelöst werden kann, bspw. eine sicherheitsgerichtete Aktion, die das Automatisierungssystem in einen sicheren Zustand überführt.

Wie in Fig. 3 durch die Threads 0-3 in jedem Kanal angedeutet ist, ist in beiden Kanälen eine nebenläufige Bearbeitung der Aufgaben durch die Verarbeitungseinheiten in parallelen Ausführungssträngen (Threads) möglich. Die Threads 0-3 können nebenläufig ausgeführt werden und wie in Bezug auf die Fig. 1 beschrieben auf eine gemeinsame Ressource zugreifen. Mit anderen Worten: Der erste Verarbeitungskanal A hat eine gemeinsame Ressource R1A, auf die eine Verarbeitungseinheit des ersten Verarbeitungskanals A zu greifen kann, und der zweite Verarbeitungskanal B hat eine gemeinsame Ressource R1B, auf die eine Verarbeitungseinheit des zweiten Verarbeitungskanals B zu greifen kann. Der Zugriff auf die jeweilige gemeinsame Ressource innerhalb des jeweiligen Verarbeitungskanals ist, wie in Fig. 1 für einen einzelnen Kanal beschrieben, geregelt, d.h., über Sperrmechanismen abgesichert, sodass eine Konsistenz der jeweiligen gemeinsamen Ressource gewährleistet ist.

Exemplarisch ist in Fig. 3 der gleiche zeitliche Zugriff auf die gemeinsame Ressource angedeutet wie in Fig. 1. Die Bezugszeichen 12A, 12B, 14A, 14B, 16A und 16B entsprechen somit den Bezugszeichen 12, 14 und 16 aus Fig. 1 jeweils für den entsprechenden Kanal A oder B.

Um eine redundante Verarbeitung von Aufgaben, wie oben beschrieben, zu ermöglichen, müssen die Sperrmechanismen über die Kanalgrenzen hinweg synchronisiert werden, weil es sonst zu unterschiedlichen Zuständen in den Kanälen A und B kommen kann, die einen Abgleich der Kanäle erschweren oder unmöglich machen. Aus diesem Grund werden die Sperrmechanismen zwischen den Kanälen durch geeignete Maßnahmen synchronisiert, wie hier durch die "Sync"s angedeutet ist. Die Anzahl dieser Synchronisierungsvorgänge hängt unmittelbar von der Anzahl der Aufgaben ab, die auf die geteilte Ressource zugreifen, sowie von der Anzahl der geteilten Ressourcen.

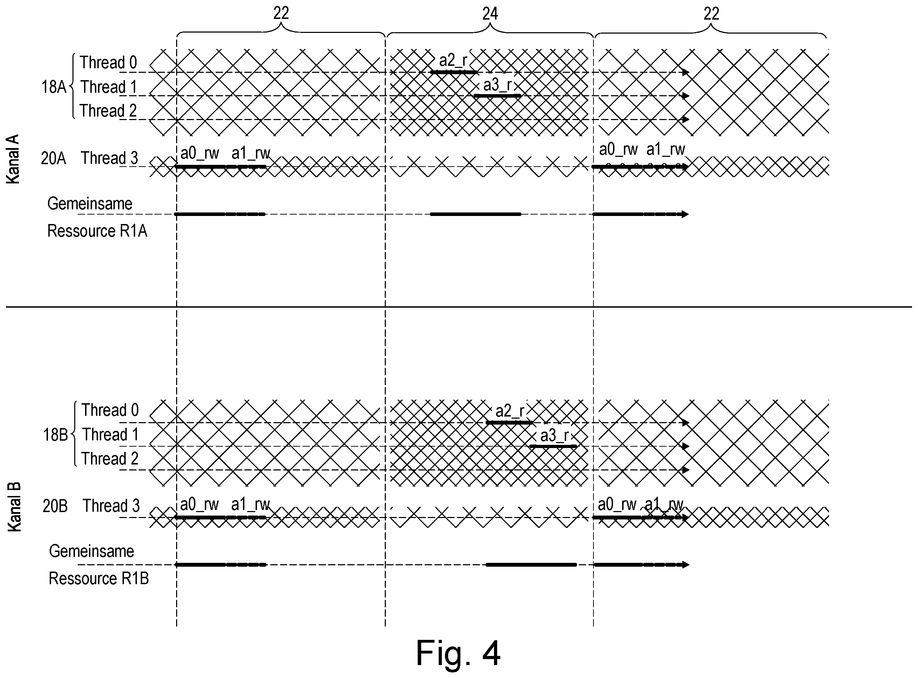

Fig. 4 zeigt in einer schematischen Darstellung ein Beispiel für eine synchronisierte Nebenläufigkeit in zwei Verarbeitungskanälen gemäß einem Ausführungsbeispiel der vorliegenden Offenbarung.

Wie in Fig. 3, zeigt Fig. 4 ein System mit zwei Verarbeitungskanälen A und B. Kanal B führt parallel zum Kanal A die gleichen Aufgaben aus. Innerhalb der Verarbeitungskanäle kann die Ausführung der Aufgaben in nebenläufigen Ausführungssträngen (Threads 0-3) erfolgen. Die Ausführungsstränge in Kanal A können dabei auf eine gemeinsame Ressource R1A zugreifen und die Ausführungsstränge in Kanal B können auf eine gemeinsame Ressource R1B zugreifen.

Wie in Fig. 2 anhand eines einzelnen Kanals erläutert, erfolgen die Zugriffe auf die jeweilige gemeinsame Ressource R1A bzw. R1B in den Kanälen A und B in gleicher, zeitlich vorhersehbarer Weise. Im dargestellten Beispiel sind die Threads 0 bis 3 jedes Kanals jeweils zwei verschiedenen Gruppen zugeordnet, die unterschiedliche Zugriffsrechte auf die gemeinsame Ressource R1A bzw. R1B besitzen. Die erste Gruppe 18A des ersten Verarbeitungskanals A und die erste Gruppe 18B des Verarbeitungskanals B umfassen Threads, die ausschließlich lesende Operationen auf die Ressource R1A bzw. R1B ausführen dürfen, während die zweite Gruppe 20A des ersten Verarbeitungskanals A und die zweite Gruppe 20B des zweiten Verarbeitungskanals B Threads enthalten, die sowohl lesende als auch schreibende Zugriffe auf die Ressource R1A bzw. R1B durchführen können. Im dargestellten Beispiel gehören Thread 0, Thread 1 und Thread 2 der beiden Verarbeitungskanäle zur ersten Gruppe 18A und 18B, während die Threads 3 der beiden Verarbeitungskanäle der zweiten Gruppe 20A und 20b zugeordnet sind.

Die Verarbeitung der Threads erfolgt in den Kanälen in definierten, voneinander getrennten Zeitabschnitten. Die Threads der zweiten Gruppe 20A und 20B werden innerhalb eines ersten Zeitabschnitts 22 ausgeführt, während die Threads der ersten Gruppe 18A und 18B innerhalb eines zweiten Zeitabschnitts 24 arbeiten. Diese strikte Trennung der Zeitabschnitte stellt sicher, dass während des ersten Zeitabschnitts 22 ausschließlich die Threads der zweiten Gruppe 20A und 20B auf die jeweilige gemeinsame Ressource R1A und R1B zugreifen dürfen, wobei sowohl Lese- als auch Schreibzugriffe möglich sind. Im Gegensatz dazu haben während des zweiten Zeitabschnitts 24 nur die Threads der ersten Gruppe 18A und 18B Zugriff auf die jeweilige gemeinsame Ressource R1A und R1B, wobei ausschließlich lesende Zugriffe erlaubt sind.

Die hier verwendete Anzahl der Threads ist lediglich exemplarisch und nicht als Einschränkung zu verstehen. Das System kann eine beliebige Anzahl von Threads aufweisen, die jeweils einer der beiden Gruppen zugeordnet werden. Unabhängig von der tatsächlichen Anzahl der Threads bleibt die grundsätzliche Regelung bestehen, dass alle Threads einer Gruppe innerhalb des jeweils zugewiesenen Zeitabschnitts arbeiten und die Ressourcen R1A und R1B ausschließlich gemäß den für diesen Abschnitt geltenden Zugriffsrechten nutzen dürfen. Ferner versteht sich, dass anstelle von zwei redundanten Verarbeitungskanälen ebenso drei oder mehr Verarbeitungskanäle vorgesehen sein können, die nach dem gleichen Prinzip arbeiten.

Die beiden Zeitabschnitte 22, 24 sind voneinander isoliert, sodass während des ersten Zeitabschnitts 22 die Threads der ersten Gruppe 18A und 18B inaktiv bleiben, zumindest insofern es ihren Zugriff auf die gemeinsame Ressource R1A bzw. R1B betrifft. Ebenso haben während des zweiten Zeitabschnitts 24 die Threads der zweiten Gruppe 20A und 20B keinen Zugriff auf die Ressource R1A bzw. R1B. Diese Aufteilung stellt sicher, dass die Ressource R1A bzw. R1B nur in einem vordefinierten Zeitraum verändert werden können, während in einem separaten Zeitraum ausschließlich lesende Zugriffe erfolgen. In diesem Zusammenhang kann der erste Zeitabschnitt 22 als der Abschnitt betrachtet werden, in dem die gemeinsame Ressource (R1A, R1B) eines Kanals verändert werden darf, während der zweite Zeitabschnitt 24 als Abschnitt dient, in dem die gemeinsame Ressource (R1A, R1B) eines Kanals nicht verändert werden darf.

Im dargestellten Beispiel erfolgen während des ersten Zeitabschnitts 22 zwei Zugriffe a0_rw und a1_rw auf die gemeinsame Ressource R1A bzw. R1B. Da diese Zugriffe sowohl Lese- als auch Schreiboperationen umfassen, können sie den Zustand der Ressource R1A bzw. R1B verändern. Um sicherzustellen, dass keine Konflikte zwischen konkurrierenden Schreibzugriffen entstehen, werden diese Operationen streng sequenziell ausgeführt. Eine Möglichkeit, dies zu erreichen, besteht darin, der zweiten Gruppe 20A und 20B jeweils nur einen einzelnen Thread zuzuweisen, wodurch ein paralleler Zugriff auf die jeweilige Ressource R1A und R1B automatisch ausgeschlossen wird. Alternativ kann, falls mehrere Threads der zweiten Gruppe 20A und 20B zugeordnet sind, eine synchronisierte Nebenläufigkeit implementiert werden, wie sie bspw. in Fig. 1 beschrieben ist, um sicherzustellen, dass die Zugriffe dennoch sequenziell erfolgen.

Im zweiten Zeitabschnitt 24 erfolgen in den beiden Kanälen jeweils die Zugriffe a2_r und a3_r auf die gemeinsame Ressource R1A bzw. R1B. Diese Zugriffe sind rein lesender Natur, sodass der Zustand der Ressourcen R1A bzw. R1B unverändert bleibt. Da keine schreibenden Operationen stattfinden, besteht auch keine Notwendigkeit für eine sequenzielle Zugriffskontrolle. Die Zugriffe auf die Ressourcen R1A bzw. R1B können daher sequenziell oder parallel erfolgen, ohne dass die Konsistenz der Ressource gefährdet wird.

Wie in Bezug auf Fig. 2 erläutert, hat die beschriebene Aufteilung in zwei Zeitabschnitte den Vorteil, dass zumindest für lesende Zugriffe auf eine komplexe Zugriffssteuerung mittels Sperrmechanismen verzichtet werden. In einem redundanten System, wie es in Fig. 4 gezeigt ist, kommt hinzu, dass auch ein Synchronisationsaufwand zwischen zwei parallel arbeitenden Kanälen reduziert werden kann. Da in dem zweiten Zeitabschnitt keine Sperrmechanismen verwendet werden, ist auch keine Synchronisation hierfür notwendig. Die sonst erforderlichen Synchronisationsvorgänge zwischen den Kanälen, wie sie in Fig. 3 gezeigt sind, können folglich zumindest in dem zweiten Zeitabschnitt 24 entfallen. Ist darüber hinaus während des ersten Abschnitts 22 eine streng sequenzielle Verarbeitung vorgegeben, beispielsweise in dem während des ersten Abschnitts 22, wie hier gezeigt jeweils nur ein Thread pro Kanal aktiv ist, ist auch in diesem Abschnitt 22 keine Synchronisation für Sperrmechanismen notwendig.

Indem die Zugriffe auf gemeinsame Ressourcen in einem Kanal auf eine zeitlich vorhersehbare Weise gesteuert werden, kann somit nicht nur die Performance des einzelnen Kanals gesteigert werden, sondern insbesondere ein Synchronisationsaufwand zwischen zwei Kanälen, wenn diese als redundante Kanäle fungieren, reduziert oder ganz vermieden werden.

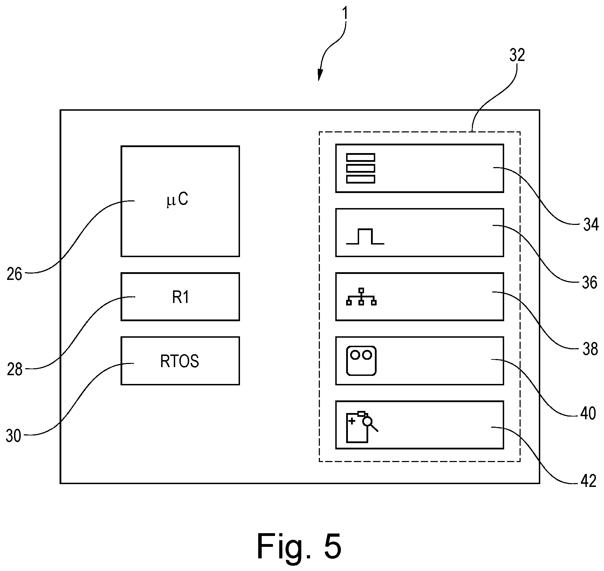

Fig. 5 zeigt in einem Blockdiagramm eine einkanalige Steuerungsvorrichtung für ein Automatisierungssystem mit zeitlich vorhersagbarer Zugriffssteuerung. Die Steuerungsvorrichtung ist hier mit der Bezugsziffer 1 bezeichnet und eine einkanalige Steuerungsvorrichtung mit einer einzelnen ersten Verarbeitungseinheit 26, die für die Nebenläufigkeit der Aufgabenverarbeitung verantwortlich ist. Die erste Verarbeitungseinheit 26 ist so eingerichtet, dass sie eine Vielzahl von Aufgaben in mindestens zwei Ausführungssträngen ausführt, wobei diese Aufgaben auf eine gemeinsame Ressource 28 zugreifen können. Die Aufgabenverarbeitung erfolgt in zeitlich voneinander getrennten Abschnitten, sodass konkurrierende Zugriffe kontrolliert werden.

Die erste Verarbeitungseinheit 26 ist speziell darauf ausgelegt, einen ersten Abschnitt unter Verwendung einer ersten Zugriffssteuerung auszuführen und einen zweiten Abschnitt unter Verwendung einer zweiten Zugriffssteuerung. Die erste Zugriffssteuerung ermöglicht sowohl lesende als auch schreibende Zugriffe auf die gemeinsame Ressource 28, während die zweite Zugriffssteuerung sicherstellt, dass keine schreibenden Zugriffe auf die gemeinsame Ressource 28 erfolgen. Dies bedeutet, dass während des zweiten Abschnitts ausschließlich lesende Operationen gestattet sind, wodurch eine konfliktfreie Verarbeitung mehrerer paralleler Aufgaben ermöglicht wird.

Die Steuerungsvorrichtung 1 kann beispielsweise als Speicherprogrammierbare Steuerung (SPS), als Embedded Controller, als industrieller PC (IPC) oder als Teil eines verteilten Steuerungssystems implementiert sein. In modernen Fertigungsanlagen oder automatisierten Produktionsstraßen steuert sie eine Vielzahl von Maschinen und Sensoren, verarbeitet Sensordaten in Echtzeit und sendet entsprechende Steuerbefehle an Aktoren.

Die erste Verarbeitungseinheit 26 kann als Mikroprozessor, Multicore-Prozessor, Field Programmable Gate Array (FPGA) oder als dedizierte Echtzeitverarbeitungseinheit implementiert sein. In einem Mikroprozessor- oder Multicore-Design übernimmt ein Betriebssystem 30 mit Echtzeitfähigkeiten das Task-Management und regelt die Zuweisung der Aufgaben zu den definierten Zeitabschnitten. In einer FPGA-Implementierung kann die Zugriffssteuerung hardwarebasiert erfolgen, wodurch eine besonders schnelle und deterministische Verarbeitung ermöglicht wird. Alternativ kann die Verarbeitungseinheit auch als Anwendungsspezifische Integrierte Schaltung (ASIC) realisiert sein, wenn die Steuerung in hochspezialisierten Industrieanwendungen mit minimaler Latenz zum Einsatz kommt.

Die gemeinsame Ressource 28 stellt eine zentrale Einheit innerhalb der Steuerungsvorrichtung 10 dar, auf die mehrere Ausführungsstränge zugreifen können. Sie kann in unterschiedlichen Formen ausgebildet sein, abhängig von der spezifischen Anwendung der Steuerungsvorrichtung 10. Typischerweise handelt es sich um eine Speicherstruktur, eine Datenbank, einen Registersatz, einen Puffer, eine Kommunikationsschnittstelle oder eine Hardwareeinheit, die von mehreren Prozessen oder Threads verwendet wird.

In vielen Automatisierungssystemen kann die gemeinsame Ressource 28 ein gemeinsam genutzter Speicherbereich sein, beispielsweise ein globaler Speicherpuffer, eine FIFO-Warteschlange oder ein Dual-Port-Speicher, der von mehreren Prozessen gelesen und geschrieben wird. In speicherprogrammierbaren Steuerungen (SPS) könnte die gemeinsame Ressource ein Abbild des Prozessabbilds sein, das Sensordaten speichert und die Ausgabe für Aktoren bereitstellt.

Eine weitere Ausgestaltung der gemeinsamen Ressource 28 kann eine Peripherie- oder Kommunikationsschnittstelle sein, etwa ein gemeinsamer Buszugang (z. B. CAN-Bus, Profinet, EtherCAT) oder ein Registersatz, der über eine serielle oder parallele Schnittstelle mit externen Komponenten kommuniziert. In vernetzten Automatisierungssystemen kann die gemeinsame Ressource eine Datenbank oder ein gemeinsam genutztes Steuerungsregister sein, das von mehreren Steuerungseinheiten simultan abgefragt wird.

Je nach Implementierung kann die gemeinsame Ressource 28 auch eine physikalische Hardwarekomponente sein, beispielsweise eine Motorsteuerung, eine Speicherzelle in einer FPGA-Logik oder ein spezieller Prozessorblock zur Verarbeitung von Echtzeitdaten. In Robotiksystemen kann die gemeinsame Ressource ein gemeinsam genutzter Antriebscontroller oder eine Positionsregelungseinheit sein, die von mehreren parallelen Steuerprozessen genutzt wird.

Durch die in der Steuerungsvorrichtung 1 implementierte Zugriffssteuerung wird sichergestellt, dass der Zugriff auf die gemeinsame Ressource 28 strukturiert, konfliktfrei und deterministisch erfolgt. Dies ist besonders in Echtzeitsystemen von Bedeutung, in denen unkontrollierte Schreibzugriffe oder inkonsistente Leseoperationen zu Fehlfunktionen oder unerwarteten Zuständen im Automatisierungssystem führen könnten. Die Trennung der Zugriffstypen in zeitlich voneinander getrennte Abschnitte ermöglicht eine optimale Nutzung der Ressource, ohne dass klassische Sperrmechanismen mit hohem Verwaltungsaufwand erforderlich sind.

Zusätzlich zu der ersten Verarbeitungseinheit 26 kann die Steuerungsvorrichtung 1 weitere, optionale Komponenten 32 enthalten, die für den Betrieb und die Kommunikation innerhalb eines Automatisierungssystems essenziell sind. Eine Speichereinheit 34 kann sowohl flüchtigen als auch nicht-flüchtigen Speicher enthalten, um Zwischenergebnisse, Steuerparameter oder Konfigurationsdaten abzulegen. Eine Echtzeit-Takteinheit 36 kann erforderlich sein, um die zeitlichen Abschnitte exakt zu synchronisieren und sicherzustellen, dass Echtzeitanforderungen zuverlässig erfüllt werden. Kommunikationsschnittstellen 38 wie Ethernet, Profinet, EtherCAT oder serielle Bussysteme ermöglichen die Datenübertragung mit Sensoren, Aktoren und übergeordneten Steuerungssystemen.

Für die Interaktion mit einem Bediener oder zur Fernüberwachung kann die Steuerungsvorrichtung 1 zudem über eine Benutzerschnittstelle 40, beispielsweise ein Touchscreen-Panel oder eine Web-basierte Steuerungsoberfläche, verfügen. Eine Diagnose- und Fehlerüberwachungseinheit 42 kann zur laufenden Analyse des Systemzustands eingesetzt werden, um frühzeitig Abweichungen oder Fehlfunktionen zu erkennen und gegebenenfalls Korrekturmaßnahmen einzuleiten.

Diese Steuerungsvorrichtung 1 ist somit so konzipiert, dass sie eine zuverlässige, effiziente und deterministische Verarbeitung von Aufgaben ermöglicht, die in einem nebenläufigen Automatisierungssystem auftreten. Durch die gezielte Trennung von Lese- und Schreibzugriffen in definierten Zeitabschnitten wird sichergestellt, dass Konkurrenzsituationen vermieden werden, während gleichzeitig eine optimale Systemleistung erreicht wird.

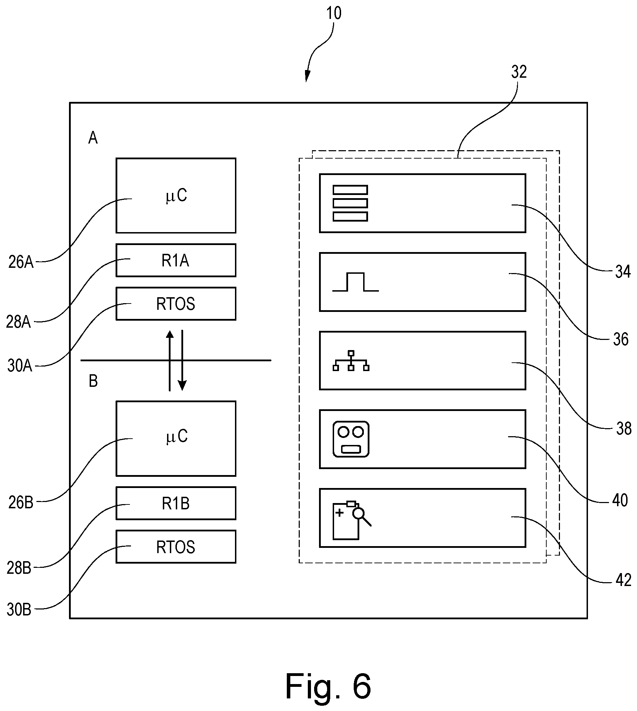

Fig. 6 zeigt in einem Blockdiagramm eine zweikanalige Steuerungsvorrichtung für ein Automatisierungssystem mit zeitlich vorhersagbarer Zugriffssteuerung.

Die Steuerungsvorrichtung ist in ihrer Gesamtheit mit der Bezugsziffer 10 bezeichnet. Im Gegensatz zur Steuerungsvorrichtung 1 gemäß Fig. 5 ist die Steuerungsvorrichtung 10 eine zweikanalige Steuerungsvorrichtung mit einem ersten Verarbeitungskanal A und einem zweiten Verarbeitungskanal B.

Der Verarbeitungskanal A weist eine erste Verarbeitungseinheit 26A auf, die für die Nebenläufigkeit der Aufgabenverarbeitung im Verarbeitungskanal A verantwortlich ist. Die Verarbeitungseinheit 26A ist so eingerichtet, dass sie eine Vielzahl von Aufgaben in mindestens zwei Ausführungssträngen ausführt, wobei diese Aufgaben auf eine gemeinsame Ressource 28A zugreifen können. Die Aufgabenverarbeitung erfolgt in zeitlich voneinander getrennten Abschnitten, sodass konkurrierende Zugriffe kontrolliert werden.

Wie in Bezug auf Fig. 5 bereits erläutert, ist die Verarbeitungseinheit 26A darauf ausgelegt, einen ersten Abschnitt unter Verwendung einer ersten Zugriffssteuerung auszuführen und einen zweiten Abschnitt unter Verwendung einer zweiten Zugriffssteuerung. Die erste Zugriffssteuerung ermöglicht sowohl lesende als auch schreibende Zugriffe auf die gemeinsame Ressource 28A, während die zweite Zugriffssteuerung sicherstellt, dass keine schreibenden Zugriffe auf die gemeinsame Ressource 28A erfolgen. Dies bedeutet, dass während des zweiten Abschnitts ausschließlich lesende Operationen gestattet sind, wodurch eine konfliktfreie Verarbeitung mehrerer paralleler Aufgaben ermöglicht wird.

Der Verarbeitungskanal B weist eine zweite Verarbeitungseinheit 26B auf, die für die Nebenläufigkeit der Aufgabenverarbeitung in dem zweiten Verarbeitungskanal B verantwortlich ist. Die zweite Verarbeitungseinheit 26B ist so eingerichtet, dass sie eine Vielzahl von Aufgaben in mindestens zwei Ausführungssträngen ausführt, wobei diese Aufgaben auf eine gemeinsame Ressource 28B zugreifen können. Die Aufgabenverarbeitung erfolgt, wie bei der ersten Verarbeitungseinheit 26A, in zeitlich voneinander getrennten Abschnitten, sodass konkurrierende Zugriffe kontrolliert werden.

Folglich ist auch die zweite Verarbeitungseinheit 26B darauf ausgelegt, einen ersten Abschnitt unter Verwendung einer ersten Zugriffssteuerung auszuführen und einen zweiten Abschnitt unter Verwendung einer zweiten Zugriffssteuerung. Die erste Zugriffssteuerung ermöglicht sowohl lesende als auch schreibende Zugriffe auf die gemeinsame Ressource 28B, während die zweite Zugriffssteuerung sicherstellt, dass keine schreibenden Zugriffe auf die gemeinsame Ressource 28B erfolgen. Dies bedeutet, dass während des zweiten Abschnitts ausschließlich lesende Operationen gestattet sind, wodurch eine konfliktfreie Verarbeitung mehrerer paralleler Aufgaben ermöglicht wird.

Die Steuerungsvorrichtung 10 kann ferner die optionalen Komponenten 32 enthalten, die in Bezug auf Fig. 5 näher erläutert worden sind. Daher wird an dieser Stelle auf eine erneute Beschreibung der einzelnen Komponenten verzichtet. Die Komponenten 32 können ebenfalls redundant ausgelegt sein, wie hier durch den zweiten gestrichelten Kasten angedeutet ist. So können einzelne Komponenten der optionalen Komponenten 32 dem ersten oder zweiten Verarbeitungskanal zugeordnet sein. Denkbar ist jedoch auch, dass sich die Verarbeitungskanäle die optionalen Komponenten 32 teilen.

Die Verarbeitungskanäle können die gleichen Aufgaben redundant zueinander ausführen und ihre Ergebnisse untereinander abgleichen, um auf diese Weise Fehler in einem Verarbeitungskanal erkennen und entsprechend reagieren zu können. Der Abgleich zwischen den Kanälen kann auch eine Synchronisation der Abarbeitung in den einzelnen Kanälen beinhalten. Vorteilhaft beschränkt sich diese Synchronisation jedoch auf den Abgleich der Wechsel zwischen dem ersten Abschnitt und dem zweiten Abschnitt, sodass der Synchronisationsaufwand gering und deterministisch ist und nicht von der Anzahl der nebenläufigen Ausführungsstränge oder der Anzahl der geteilten Ressourcen abhängig ist.

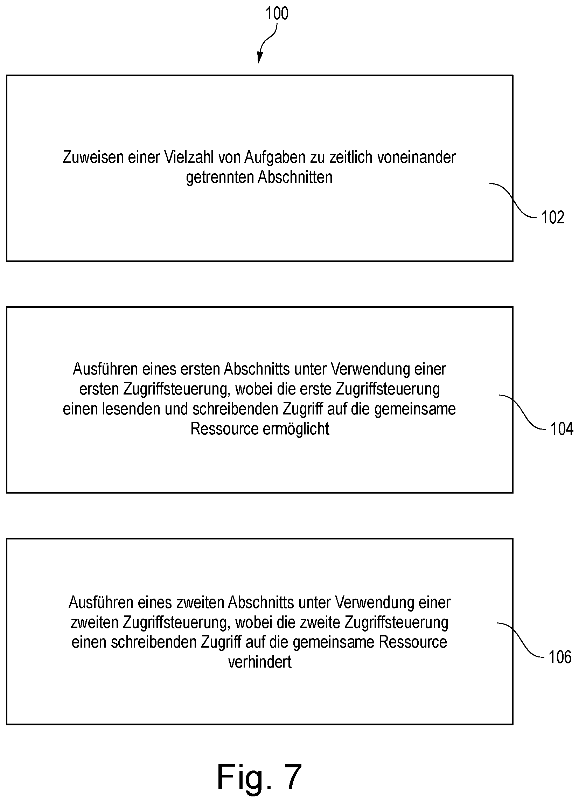

Fig. 7 zeigt in einem Blockdiagramm ein Verfahren zum Steuern eines Automatisierungssystems bei einkanaliger Verarbeitung. Die Darstellung veranschaulicht die strukturierte Steuerung des Zugriffs auf eine gemeinsame Ressource, indem Aufgaben zeitlich voneinander getrennten Abschnitten zugeordnet werden. Durch diese Vorgehensweise wird eine deterministische Nebenläufigkeit erreicht, wodurch konkurrierende Zugriffe kontrolliert und potenzielle Konflikte vermieden werden.

In Fig. 7 ist das Verfahren insgesamt mit der Bezugsziffer 100 bezeichnet. Das Diagramm zeigt eine Abfolge von Verfahrensschritten, die die Aufteilung, Verarbeitung und Steuerung der Aufgaben innerhalb des Automatisierungssystems beschreiben. Die einzelnen Schritte 102 bis 106 verdeutlichen die Abfolge der Prozessschritte, die zur geregelten und konfliktfreien Nutzung der gemeinsamen Ressource beitragen.

Im Schritt 102 werden die auszuführenden Aufgaben zeitlich voneinander getrennten Abschnitten zugewiesen. Diese Zuweisung stellt sicher, dass Aufgaben, die schreibend auf die gemeinsame Ressource zugreifen müssen, von Aufgaben getrennt verarbeitet werden, die lediglich lesenden Zugriff benötigen. Durch diese Einteilung wird verhindert, dass konkurrierende Zugriffe auftreten, wodurch die Datenkonsistenz und Systemstabilität gewährleistet werden.

Im Schritt 104 erfolgt die Ausführung eines ersten Abschnitts unter Verwendung einer ersten Zugriffssteuerung. Diese Zugriffssteuerung ermöglicht sowohl lesende als auch schreibende Zugriffe auf die gemeinsame Ressource. Dadurch können in diesem Abschnitt alle Aufgaben, die eine Modifikation der Ressource erfordern, in einer geordneten und kontrollierten Weise ausgeführt werden. Um Dateninkonsistenzen zu vermeiden, kann dieser Abschnitt entweder ausschließlich sequenziell verarbeitet werden oder eine synchronisierte Nebenläufigkeit implementiert sein, wie sie bspw. bereits in Fig. 1 beschrieben wurde.

Im Schritt 106 wird ein zweiter Abschnitt ausgeführt, der einer zweiten Zugriffssteuerung unterliegt. Diese Zugriffssteuerung verhindert schreibende Zugriffe, sodass die gemeinsame Ressource ausschließlich lesend genutzt wird. Da in diesem Abschnitt keine Modifikationen der Ressource erfolgen, können Aufgaben entweder sequenziell oder parallel ausgeführt werden, ohne dass Synchronisationsmechanismen erforderlich sind. Dadurch wird eine effiziente Nutzung der Rechenkapazitäten ermöglicht, da Leseoperationen ohne Blockierungen oder Verzögerungen stattfinden können.

Das Verfahren ist darauf ausgelegt, eine strukturierte Steuerung des Zugriffs auf eine gemeinsame Ressource innerhalb eines Automatisierungssystems zu ermöglichen. Durch die gezielte Trennung von Lese- und Schreiboperationen wird sichergestellt, dass keine unkontrollierten Nebenläufigkeitsprobleme auftreten. Dies führt zu einer verbesserten Vorhersagbarkeit der Systemreaktionen, einer erhöhten Effizienz in der Aufgabenverarbeitung sowie einer besseren Einhaltung von Echtzeitanforderungen.

Die dargestellte Methodik kann in verschiedenen Implementierungsformen realisiert werden, etwa in speicherprogrammierbaren Steuerungen (SPS), industriellen Steuerungssystemen, eingebetteten Steuerungseinheiten oder verteilten Automatisierungssystemen. Die beschriebenen Schritte lassen sich entweder softwareseitig durch geeignete Task-Scheduler und Multithreading-Mechanismen oder hardwareseitig durch eine spezialisierte Verarbeitungseinheit mit integrierter Zugriffssteuerung umsetzen.

Durch diese Verfahrensweise wird die Systemstabilität erhöht, da es zu keiner unkontrollierten Konkurrenz um Ressourcen kommt. Gleichzeitig wird die Effizienz der parallelen Verarbeitung gesteigert, indem Lesezugriffe flexibel zusammengefasst und Schreibzugriffe deterministisch koordiniert werden. Das Verfahren stellt somit eine leistungsstarke und ressourcenschonende Lösung für Automatisierungssysteme dar, die eine hohe Echtzeitfähigkeit und Prozesssicherheit erfordern.

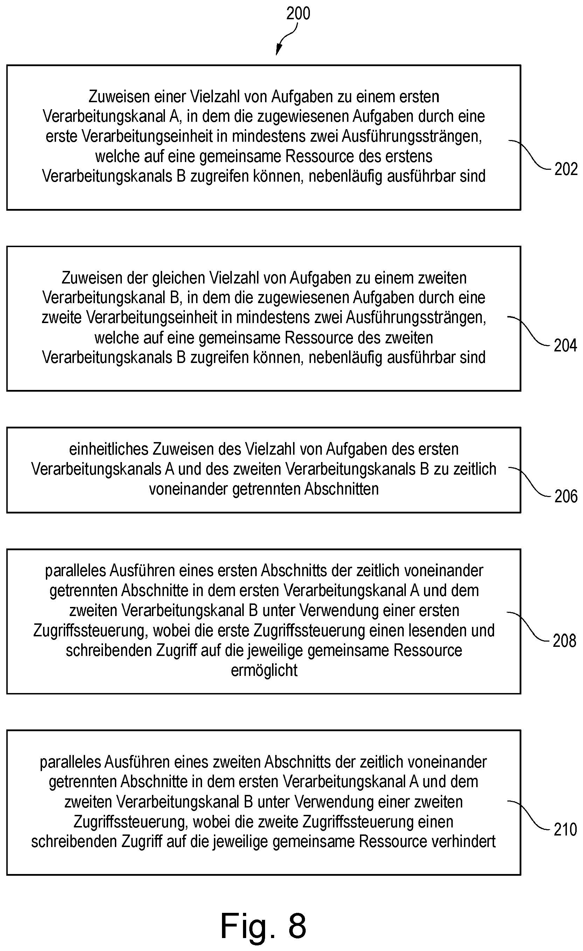

Fig. 8 zeigt in einem Blockdiagramm eine zweikanalige Variante des in Fig. 7 dargestellten Verfahrens zur Steuerung eines Automatisierungssystems. Das Verfahren ist in seiner Gesamtheit mit der Bezugsziffer 200 bezeichnet. Die Abbildung veranschaulicht die gleichzeitige Verarbeitung einer Vielzahl von Aufgaben in zwei parallel arbeitenden Verarbeitungskanälen A und B, wobei jeder Kanal über eine eigene Verarbeitungseinheit und eine eigene gemeinsame Ressource verfügt. Die Aufgaben werden sowohl dem ersten Verarbeitungskanal A als auch dem zweiten Verarbeitungskanal B zugewiesen und jeweils durch eine zugehörige Verarbeitungseinheit in mindestens zwei nebenläufigen Ausführungssträngen bearbeitet. Dabei greifen die Ausführungsstränge im ersten Kanal auf eine gemeinsame Ressource des ersten Verarbeitungskanals zu, während die Ausführungsstränge im zweiten Kanal eine separate, aber gleichartig strukturierte Ressource des zweiten Verarbeitungskanals nutzen (202, 204).

Die Vielzahl von Aufgaben wird in beiden Kanälen einheitlich zeitlich voneinander getrennten Abschnitten zugewiesen. Diese Abschnitte strukturieren die Zugriffsmöglichkeiten auf die jeweiligen Ressourcen und schaffen einen synchronisierten Rahmen für die parallele Ausführung in beiden Kanälen (206).

Während eines ersten Abschnitts erfolgt die Bearbeitung unter einer ersten Zugriffssteuerung, welche sowohl Lese- als auch Schreibzugriffe auf die jeweilige Ressource erlaubt. Dadurch können in dieser Phase alle Aufgaben, die eine Modifikation der Ressourcen erfordern, koordiniert und - je nach Ausgestaltung - entweder sequenziell oder mit geeigneter Nebenläufigkeitskontrolle verarbeitet werden (208).

Im Anschluss wird in beiden Kanälen synchron ein zweiter Abschnitt ausgeführt, der einer zweiten Zugriffssteuerung unterliegt. Diese verhindert schreibende Zugriffe und erlaubt ausschließlich lesende Zugriffe auf die jeweilige Ressource (210). Da keine Modifikationen erfolgen, entfällt in dieser Phase die Notwendigkeit von Synchronisationsmaßnahmen sowohl innerhalb der Kanäle als auch zwischen ihnen, was eine besonders effiziente Nutzung der Systemressourcen ermöglicht.

Das dargestellte Verfahren sorgt durch die zeitlich deterministische und zwischen beiden Kanälen abgestimmte Struktur der Zugriffskontrolle für eine konsistente und vorhersehbare Verarbeitung der Aufgaben. Potenzielle Konflikte durch konkurrierende Zugriffe auf gemeinsame Ressourcen werden gezielt vermieden. Gleichzeitig wird die Rechenleistung beider Kanäle optimal genutzt, insbesondere in Abschnitten, in denen mehrere Ausführungsstränge parallel auf die Ressourcen lesend zugreifen können. Diese zweikanalige Ausgestaltung trägt so wesentlich zur Steigerung der Ausfallsicherheit, Systemeffizienz und Echtzeitfähigkeit des Automatisierungssystems bei.

Es wird darauf hingewiesen, dass die vorstehenden Ausführungsbeispiele nur exemplarisch sind und weitere Varianten einzelner Komponenten möglich sind, um Ausgestaltungen der nachfolgenden Ansprüche zu realisieren. Der Schutzumfang der vorliegenden Erfindung wird durch die folgenden Ansprüche bestimmt und ist nicht durch die in der Beschreibung erläuterten oder in den Figuren dargestellten Merkmale begrenzt.

## Patentansprüche

1. Steuerungsvorrichtung (10) für ein Automatisierungssystem, aufweisend:
einen ersten Verarbeitungskanal A mit einer ersten Verarbeitungseinheit (26A), die dazu eingerichtet ist, eine Vielzahl von Aufgaben in mindestens zwei Ausführungssträngen, welche auf eine gemeinsame Ressource (28A) des ersten Verarbeitungskanals A zugreifen können, nebenläufig auszuführen; und
einen zweiten Verarbeitungskanal B mit einer zweiten Verarbeitungseinheit (26B), die dazu eingerichtet ist, die gleiche Vielzahl von Aufgaben parallel zu der ersten Verarbeitungseinheit (26A) in mindestens zwei Ausführungssträngen, welche auf eine gemeinsame Ressource (28B) des zweiten Verarbeitungskanals B zugreifen können, nebenläufig auszuführen,
wobei die Vielzahl von Aufgaben zeitlich voneinander getrennten Abschnitten zuordenbar ist,
wobei die erste Verarbeitungseinheit (26A) und die zweite Verarbeitungseinheit (26B) dazu eingerichtet sind,
einen ersten Abschnitt (22) der zeitlich voneinander getrennten Abschnitte unter Verwendung einer ersten Zugriffssteuerung auszuführen, und
einen zweiten Abschnitt (24) der zeitlich voneinander getrennten Abschnitte unter Verwendung einer zweiten Zugriffssteuerung auszuführen,
wobei die erste Zugriffssteuerung einen lesenden und schreibenden Zugriff auf die jeweilige gemeinsame Ressource (28A, 28B) ermöglicht, und
wobei die zweite Zugriffssteuerung einen schreibenden Zugriff auf die jeweilige gemeinsame Ressource (28A, 28B) verhindert.

2. Steuerungsvorrichtung nach Anspruch 1, wobei jede Aufgabe der Vielzahl von Aufgaben entweder dem ersten Abschnitt (22) oder dem zweiten Abschnitt (24) zugeordnet ist.

3. Steuerungsvorrichtung nach Anspruch 1 oder 2, wobei die erste Verarbeitungseinheit (26A) und die zweite Verarbeitungseinheit (26B) jeweils dazu eingerichtet sind, in dem ersten Abschnitt (22) Aufgaben, die dem ersten Abschnitt (22) zugeordnet sind, ausschließlich sequenziell zu verarbeiten und in dem zweiten Abschnitt (24) Aufgaben, die dem zweiten Abschnitt (24) zugeordnet sind, sequenziell und/oder parallel zu verarbeiten.

4. Steuerungsvorrichtung nach Anspruch 1 oder 2, wobei die erste Zugriffssteuerung eine synchronisierte Nebenläufigkeit der mindestens zwei Ausführungsstränge der jeweiligen ersten und zweiten Verarbeitungseinheit (26A, 26B) mit einem Zugriff auf die jeweilige gemeinsame Ressource (28A, 28B) ermöglicht.

5. Steuerungsvorrichtung nach einem der vorherigen Ansprüche, wobei die erste Verarbeitungseinheit (26A) und die zweite Verarbeitungseinheit (26B) jeweils eingerichtet sind, während des zweiten Abschnitts (24) nur Aufgaben auszuführen, die die jeweilige gemeinsame Ressource (28A, 28B) nicht verändern.

6. Steuerungsvorrichtung nach einem der vorherigen Ansprüche, wobei die zeitlich voneinander getrennten Abschnitte (22; 24) periodisch wechseln.

7. Steuerungsvorrichtung nach einem der vorherigen Ansprüche, wobei die Dauer des ersten und/oder zweiten Abschnitts (22; 24) dynamisch in Abhängigkeit von einer Systemauslastung oder einer externen Steuergröße anpassbar ist.

8. Steuerungsvorrichtung nach einem der vorherigen Ansprüche, wobei der zweite Abschnitt (24) erst dann beginnt, wenn alle Aufgaben, die dem ersten Abschnitt (22) zugeordnet sind, vollständig abgearbeitet wurden.

9. Steuerungsvorrichtung nach einem der vorherigen Ansprüche, wobei die erste Verarbeitungseinheit (26A) und die zweite Verarbeitungseinheit (26B) jeweils dazu eingerichtet sind, den Wechsel zwischen dem ersten und dem zweiten Abschnitt (22; 24) durch ein Echtzeitsteuerungssignal zu synchronisieren, insbesondere ein externes oder systemintern generiertes Echtzeitsteuerungssignal.

10. Steuerungsvorrichtung nach einem der vorherigen Ansprüche, wobei die erste Verarbeitungseinheit (26A) und die zweite Verarbeitungseinheit (26) jeweils dazu eingerichtet sind, den Wechsel zwischen dem ersten und dem zweiten Abschnitt (22; 24) zwischen dem ersten Verarbeitungskanal A und dem zweiten Verarbeitungskanal B zu synchronisieren.

11. Steuerungsvorrichtung nach einem der vorherigen Ansprüche, wobei die erste Verarbeitungseinheit (26A) und die zweite Verarbeitungseinheit (26B) jeweils dazu eingerichtet sind, in dem ersten Abschnitt (22) eine Priorisierung der Aufgaben anhand einer vorgegebenen Prioritätsregel durchzuführen.

12. Steuerungsvorrichtung nach einem der vorherigen Ansprüche, wobei die erste Zugriffssteuerung eine Sperrmechanismus-Überprüfung aufweist, um sicherzustellen, dass in dem ersten Abschnitt (22) ausschließlich eine sequenzielle Abarbeitung der Aufgaben erfolgt.

13. Steuerungsvorrichtung nach einem der vorherigen Ansprüche, wobei die zweite Zugriffssteuerung eine Prüfkomponente aufweist, die sicherstellt, dass keine Aufgabe in dem zweiten Abschnitt (24) die jeweilige gemeinsame Ressource (28A, 28B) verändert.

14. Steuerungsvorrichtung nach einem der vorherigen Ansprüche, wobei die erste Verarbeitungseinheit (26A) und die zweite Verarbeitungseinheit (26B) jeweils dazu eingerichtet sind, den Wechsel zwischen dem ersten und dem zweiten Abschnitt (22; 24) in Abhängigkeit von einer maximal zulässigen Verzögerung eines Echtzeitsystems durchzuführen.

15. Steuerungsvorrichtung nach einem der vorherigen Ansprüche, wobei die erste Verarbeitungseinheit (26A) und die zweite Verarbeitungseinheit (26B) jeweils dazu eingerichtet sind, die Zuweisung der Aufgaben zu den Abschnitten adaptiv anhand eines Lernalgorithmus oder eines heuristischen Verfahrens zu optimieren.

16. Verfahren zum Steuern eines Automatisierungssystems, aufweisend:
- Zuweisen einer Vielzahl von Aufgaben zu einem ersten Verarbeitungskanal A, in dem die zugewiesenen Aufgaben durch eine erste Verarbeitungseinheit (26A) in mindestens zwei Ausführungssträngen, welche auf eine gemeinsame Ressource (28A) des erstens Verarbeitungskanals B zugreifen können, nebenläufig ausführbar sind;
- Zuweisen der gleichen Vielzahl von Aufgaben zu einem zweiten Verarbeitungskanal B, in dem die zugewiesenen Aufgaben durch eine zweite Verarbeitungseinheit (26B) in mindestens zwei Ausführungssträngen, welche auf eine gemeinsame Ressource (28B) des zweiten Verarbeitungskanals B zugreifen können, nebenläufig ausführbar sind;
- einheitliches Zuweisen der Vielzahl von Aufgaben des ersten Verarbeitungskanals A und des zweiten Verarbeitungskanals B zu zeitlich voneinander getrennten Abschnitten;
- paralleles Ausführen eines ersten Abschnitts (22) der zeitlich voneinander getrennten Abschnitte in dem ersten Verarbeitungskanal A und dem zweiten Verarbeitungskanal B unter Verwendung einer ersten Zugriffssteuerung, wobei die erste Zugriffssteuerung einen lesenden und schreibenden Zugriff auf die jeweilige gemeinsame Ressource (28A, 28B) ermöglicht; und
- paralleles Ausführen eines zweiten Abschnitts (24) der zeitlich voneinander getrennten Abschnitte in dem ersten Verarbeitungskanal A und dem zweiten Verarbeitungskanal B unter Verwendung einer zweiten Zugriffssteuerung, wobei die zweite Zugriffssteuerung einen schreibenden Zugriff auf die jeweilige gemeinsame Ressource (28A, 28B) verhindert.
